(19) **Europäisches Patentamt**
**European Patent Office**
**Office européen des brevets**

(11) **EP 2 159 928 B1**

(12) **EUROPEAN PATENT SPECIFICATION**

(45) Date of publication and mention
of the grant of the patent:
**03.08.2011 Bulletin 2011/31**

(51) Int Cl.:
**H04B 3/46** (2006.01)

(21) Application number: **09168750.9**

(22) Date of filing: **26.08.2009**

(54) **Apparatus and method for desiging signal transmission system**

Vorrichtung und Verfahren zum Entwurf von Signalübertragungssystemen

Méthode et appareil pour concevoir le système de transmission de signal

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **01.09.2008 JP 2008223435**

(43) Date of publication of application:
**03.03.2010 Bulletin 2010/09**

(73) Proprietor: **FUJITSU LIMITED**
**Kawasaki-shi,**
**Kanagawa 211-8588 (JP)**

(72) Inventors:
• **Tsubamoto, Daita**
**Kawasaki-shi, Kanagawa 211-8588 (JP)**
• **Tosaka, Masaki**
**Kawasaki-shi, Kanagawa 211-8588 (JP)**
• **Fukuda, Takashi**
**Kawasaki-shi, Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(56) References cited:
**EP-A- 1 300 964**

• **CHEN W Y ED - CHEN W Y: "DSL SIMULATION TECHNIQUES AND STANDARDS" DSL : SIMULATION TECHNIQUES AND STANDARDS DEVELOPMENT FOR DIGITAL SUBSCRIBER LINE SYSTEMS, INDIANAPOLIS, IN : MACMILLAN, US, 1 January 1998 (1998-01-01), pages 48-53,64, XP002191198 ISBN: 978-1-57870-017-2**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

1. Field

The embodiments discussed herein are related to a signal transmission system evaluating apparatus for evaluating a signal transmission, a signal transmission evaluating program, and a method for designing a signal transmission.

2. Description of the Related Art

In recent years, the total throughput required for digital electronic apparatuses has been increasing. With an increase in required total throughput, a signal speed in electronic apparatuses has been increasing, and a transmission margin has been decreasing.

To accommodate such situation, an amount of noise of connector crosstalk that degrades a waveform needs to be correctly estimated. In order to estimate such an amount or noise, the amplitude of a noise source and the attenuation of the noise in a connected transmission path need to be accurately computed.

As the related art, a generated noise simulation measuring method for an electronic board having integrated circuit elements mounted thereon and a noise evaluating apparatus that can accurately evaluate the amount of noise using a simplified method have been developed (refer to, for example, Japanese Unexamined Patent Application Publication No. 2007-133484 and Japanese Unexamined Patent Application Publication No. 2003-152040).

EP1300964A1 discloses a method for modelling a network comprising a plurality of transmission lines, in which method loop parameters of a first transmission line are measured, the topology of the first transmission line is determined by analyzing the measured loop parameters with reference to at least one model of a plurality of models for transmission lines of different topologies, a further model for estimating crosstalk-related parameters based on the determined topology is selected, and at least one crosstalk-related parameter is estimated based on the determined topology and the selected further model.

Various relevant DSL simulation techniques are disclosed in Chen W Y: "DSL Simulation Techniques and Standards", DSL: Simulation Techniques and Standards Development for Digital Subscriber Line Systems, Indianapolis, IN: Macmillan, US, 1 January 1998, pages 48-53 and 64, XP002191198.

In existing methods, the connector crosstalk is computed using all parameters. However, since the number of parameters is large, the amount of computation is increased. Thus, the computing time is disadvantageously increased.

SUMMARY

According to an embodiment of an aspect of the invention, a signal transmission evaluating apparatus acquires cross talk ratio and type categorized by a relationship between the first transmission path and the second transmission path for each of the pins of the second transmission path, computes an occupation ratio of the crosstalk for each of the types with respect to all of the crosstalk supplied to the first transmission path in the connector, computes a noise source output in the second transmission path on the basis of the occupation ratio for each of the types of crosstalk, computes first transmission path loss and second transmission path loss on the basis of the occupation ratio for each of the types of crosstalk, and computes an amount of received noise of the first transmission path on the basis of the noise source output and the first transmission path loss and the second transmission path loss.

Advantages of the invention may be realized and attained by means of the elements and combinations particularly pointed out in the claims.

It is to be understood that both the foregoing general description and the following detailed description are exemplary and explanatory and are not restrictive of the invention, as claimed.

BRIEF DESCRIPTION OF THE DRAWINGS

Fig. 1 is a block diagram of an exemplary configuration of a signal transmission system evaluating apparatus according to an embodiment of the present invention;

Fig. 2 is a schematic illustration of an example of a BWB transmission model according to the embodiment;

Fig. 3 is a schematic illustration of an example of an integrated model according to the embodiment;

Fig. 4 is a flowchart of an example of a connector crosstalk computing process according to the embodiment;

Fig. 5 illustrates an example of a connector condition input screen according to the present embodiment;

Fig. 6 is a flowchart of an exemplary occupation ratio computing process according to the embodiment;

Fig. 7 illustrates a table indicating an example of crosstalk types according to the embodiment;

Fig. 8 is a schematic illustration of a crosstalk type T-SS and a crosstalk type R-SS according to the embodiment;

Fig. 9 is a schematic illustration of a crosstalk type T-SD and a crosstalk type R-SD according to the embodiment;

Fig. 10 is a schematic illustration of a crosstalk type T-DS and a crosstalk type R-DS according to the embodiment;

Fig. 11 is a schematic illustration of a crosstalk type T-DD and a crosstalk type R-DD according to the embodiment;

Fig. 12 is a table illustrating an example of the pin arrangement dependency of a crosstalk ratio according to the embodiment;

Fig. 13 is a table illustrating an example of association of a crosstalk type for each of the pins of the transmitting side connector with a crosstalk ratio, according to the embodiment;

Fig. 14 is a table illustrating an example of association of the crosstalk type for each of the pins of the receiving side connector with a crosstalk ratio, according to the embodiment;

Fig. 15 is a table illustrating an example of the total sum of the crosstalk ratios for each of the crosstalk types according to the embodiment;

Fig. 16 is a table illustrating an example of the occupation ratio of each of the crosstalk types according to the embodiment;

Fig. 17 is a table illustrating an example of the condition of the noise source amplitude for each of the crosstalk types according to the embodiment;

Fig. 18 is a table illustrating an example of the wiring length for each of the crosstalk types according to the embodiment;

Fig. 19 is a table illustrating an example of the wiring loss for each of the crosstalk types according to the embodiment;

Fig. 20 is a flowchart of an example of a receiving end noise amplitude computing process according to the embodiment;

Fig. 21 is a schematic illustration of an example of a simulated transmission path length according to the embodiment;

Fig. 22 is a schematic illustration of an example of setting of a crosstalk ratio according to the embodiment;

Fig. 23 is a schematic illustration of an example of setting of a noise source model according to the embodiment;

Fig. 24 is a schematic illustration of an example of computation of the amplitude of a noise waveform according to the embodiment;

Fig. 25 is a flowchart of an example of a signal attenuation computing process according to the embodiment;

Fig. 26 is a table illustrating an example of a noise database according to the embodiment;

Fig. 27 is a schematic illustration of examples of parameters having an effect on noise according to the embodiment;

Fig. 28 is a table illustrating an example of selection of a condition of the transmission speed dependency coefficient in the noise database according to the present embodiment;

Fig. 29 is a table illustrating an example of a computing result of the transmission speed dependency coefficient according to the embodiment;

Fig. 30 is a table illustrating an example of a reference condition contained in the noise database according to the embodiment;

Fig. 31 is a table illustrating a current condition and the reference condition contained in the noise database according to the embodiment;

Fig. 32 is a schematic illustration of an example of a waveform analysis program according to the present embodiment;

Fig. 33 is a schematic illustration of an example of a wire coupling connector model according to the embodiment;

Fig. 34 is a schematic illustration of an example of a method for determining a wire spacing in the wire coupling connector model according to the embodiment;

Fig. 35 is a schematic illustration of an example of a reference characteristic of a connector according to the embodiment;

Fig. 36 is a schematic illustration of an example of the frequency characteristic of a connector model according to the embodiment; and

Fig. 37 illustrates an example of a computer system to which the present invention is applicable.

BRIEF DESCRIPTION OF THE EMBODIMENTS

Various exemplary embodiments of the present invention are described below with reference to the accompanying drawings.

An exemplary configuration of a signal transmission system evaluating apparatus according to an embodiment of the present invention is described below.

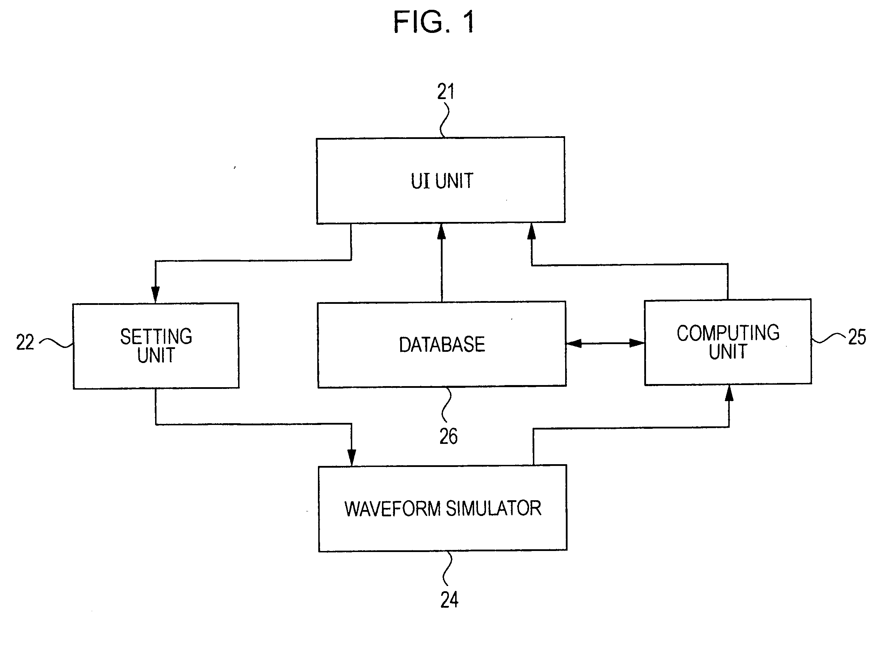

Fig. 1 is a block diagram of an exemplary configuration of the signal transmission system evaluating apparatus according to the present embodiment. The signal transmission system evaluating apparatus includes a user interface (UI) unit 21, a setting unit 22, a waveform simulator 24, a computing unit 25, and a database 26.

Note that a parameter acquiring unit corresponds to the UI unit 21, the setting unit 22, and the database 26. An occupation ratio computing unit, a noise source output computing unit, and a loss computing unit correspond to the computing unit 25. A received noise computing unit corresponds to the waveform simulator 24 and the computing unit 25.

A connector crosstalk computing process performed by the signal transmission system evaluating apparatus according to the present embodiment is described below.

In the connector crosstalk computing process according to the present embodiment, parameters regarding the amplitude of a noise source and the attenuation of a noise waveform, which are factors that have effects on the amount of final noise observed at an input terminal of a receiving element, are averaged on the basis of the occupation ratio for each type of connector crosstalk. Thus, the procedure of computation is simplified and, therefore, a high computing speed can be realized.

In existing methods, after the crosstalk is classified into many types of crosstalk, simulation is performed for each type of crosstalk. Accordingly, a large number of processing steps are required. However, for each of the simulations, only a parameter of the same items is changed in accordance with a given condition. Therefore, according to the present embodiment, some regularity is derived on the basis of the occupation ratio for each of the types of crosstalk, and the parameters are unified. As an approach for representing the regularity, an average computation approach is employed.

Case studies indicate that an error between an existing method and the method according to the present embodiment is within an allowable range. In addition, in an actual product design phase, the number of computation steps is effectively decreased. More specifically, 48 parameters that are required for an existing method can be combined into 4 parameters. According to the connector crosstalk computing process of the present embodiment, the number of computation steps can be significantly reduced in an application area in which the attenuation of a high-frequency component in a wiring board is taken into account.

In this example, the connector crosstalk computing process according to the present embodiment is described with reference to the case in which the connector crosstalk computing process is applied to estimation of the amount of connector crosstalk in a back wiring board (BWB) transmission model.

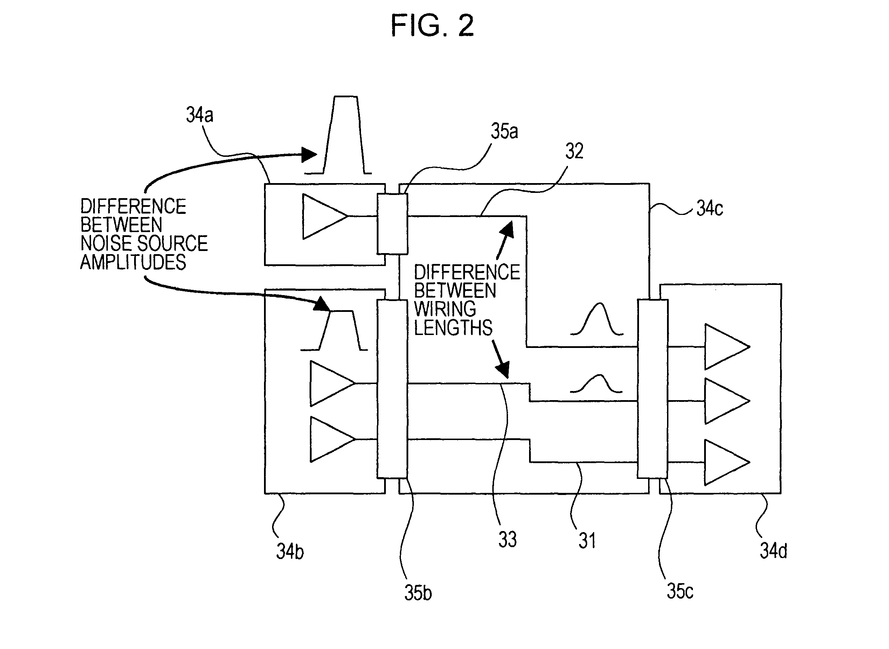

Fig. 2 is a schematic illustration of an example of a BWB transmission model according to the present embodiment. The BWB transmission model includes a target net 31 (a first transmission path) which is a system that receives noise due to crosstalk and noise source nets 32 and 33 (second transmission paths or signal sources that give noise to the target net 31) which are systems that give noise to the target net 31 due to connector crosstalk.

A signal of the target net 31 is transmitted from a transmitting element of a transmitting side plug-in unit (PIU) 34b. The signal travels through a connector 35b, a BWB 34c, and a connector 35c. Thereafter, the signal is received by a receiving element (a receiving end) of a receiving side PIU 34d. A signal of the noise source net 32 is transmitted from a transmitting element (a noise source) of a transmitting side plug-in unit (PIU) 34a. The signal travels through a connector 35a, the BWB 34c, and the connector 35c. Thereafter, the signal is received by the receiving element (a receiving end) of the receiving side PIU 34d. A signal of the noise source net 33 is transmitted from the transmitting element (the noise source) of the transmitting side PIU 34b. The signal travels through the connector 35b, the BWB 34c, and the connector 35c. Thereafter, the signal is received by the receiving element of the receiving side PIU 34d.

In this example, connector crosstalk supplied from the noise source nets 32 and 33 to the target net 31 in the connector 35c is computed. In addition, the noise source net 32 is different from the noise source net 33 in terms of the amplitude of the noise source and the wiring length.

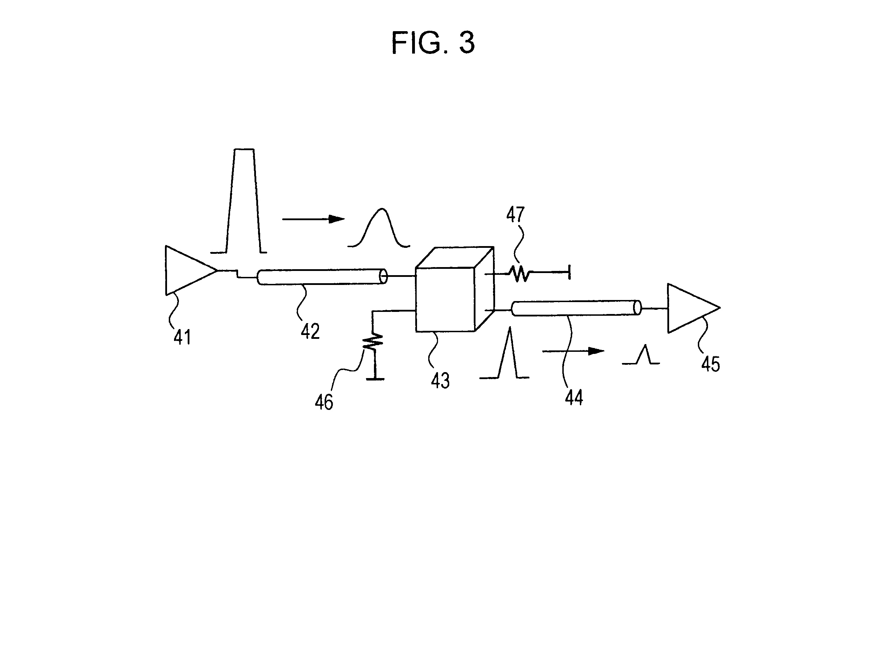

In the connector crosstalk computing process according to the present embodiment, the noise sources in the BWB transmission model are integrated into a simplified integrated model, and noise caused by connector crosstalk is computed by using the simplified integrated model. Fig. 3 is a schematic illustration of an example of the integrated model according to the present embodiment. The integrated model includes a noise source model 41, a noise source transmission path model 42, a connector model 43, a target net transmission path model 44, a waveform observation model 45, and impedance matching terminations 46 and 47. In the BWB transmission model, a signal generated by the noise source model 41 travels in the noise source transmission path model 42. Thereafter, the signal travels in the target net transmission path model 44 due to connector crosstalk occurring in the connector model 43. Finally, the signal is observed in the form of crosstalk noise in the waveform observation model 45.

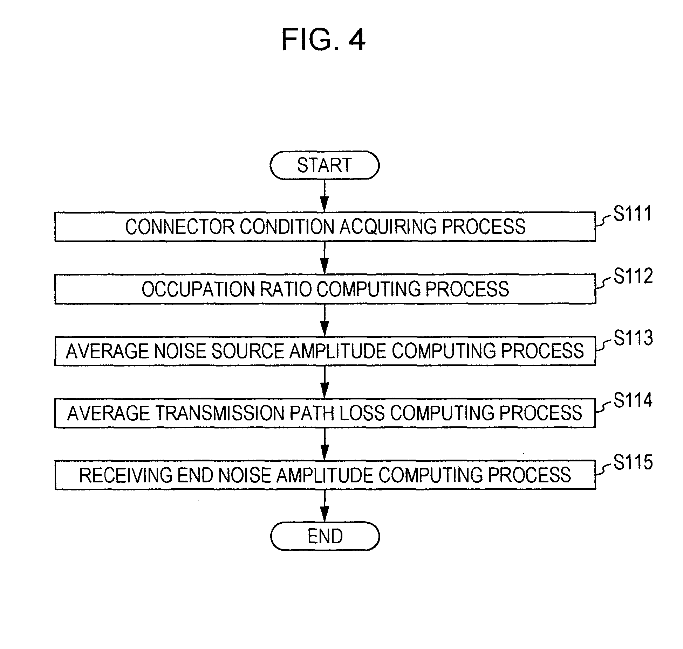

Fig. 4 is a flowchart of an example of the connector crosstalk computing process according to the present embodiment. First, the UI unit 21 performs a connector condition acquiring process in which a connector condition, which is a condition of the connector crosstalk computing process, is acquired (step S111).

Subsequently, the computing unit 25 performs an occupation ratio computing process in which the occupation ratio of each type of crosstalk is computed (step S112). At that time, in order to accurately compute the amount of noise of the connector crosstalk that reaches the receiving end, the computing unit 25 classifies the amount of noise into noise of the types of connector crosstalk defined by the connection direction and the connection type and computes the occupation ratio of each of the types of crosstalk in the total crosstalk.

Subsequently, the computing unit 25 performs an average noise source amplitude computing process in which the average noise source amplitude (the output of the noise source) is computed (step S113). The noise source amplitudes differ in accordance with the type of crosstalk. Accordingly, in existing methods, a MIN value and a MAX value of a connected device are required to be set. In contrast, according to the present embodiment, the computing unit 25 computes what percentage of the total crosstalk is accounted for by each type of connector crosstalk so as to compute the average in accordance with the occupation ratio. In this way, the amplitude is determined.

Subsequently, the computing unit 25 performs an average transmission path loss computing process in which an average transmission path loss is computed (step S114). Loss of a transmission path connected to a connector has an effect on the final amount of noise. Note that, in the present embodiment, the transmission paths for which transmission loss is computed are a noise source transmission path and a target net transmission path. For these transmission paths, like the noise source amplitude, a different parameter needs to be set for each type of connector crosstalk. Therefore, according to the present embodiment, as for the noise source amplitude, the computing unit 25 determines the transmission loss using a method in which the average is computed.

Subsequently, the computing unit 25 performs a receiving end noise amplitude computing process in which the amplitude of noise at a receiving end is computed (step S115). Thereafter, the processing flow is completed. At that time, a phenomenon in which the amplitude is attenuated during transmission of the noise source to the connector or a phenomenon in which the peak waveform of noise generated by the connector is attenuated in the transmission path may occur. Accordingly, the computing unit 25 computes the peak value of the waveform observed at the receiving end while taking into account these phenomena.

The connector condition acquiring process is described below.

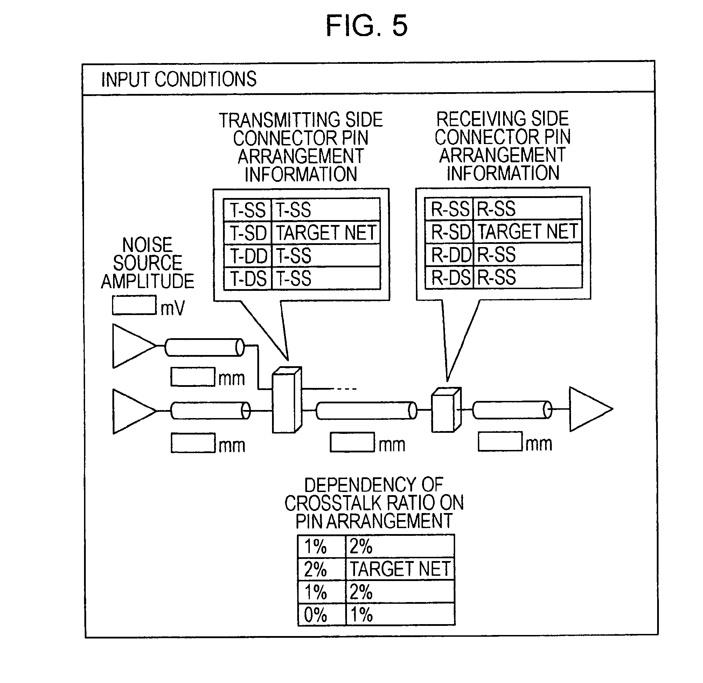

In the connector condition acquiring process, the UI unit 21 displays a connector condition input screen and acquires connector conditions input by a user through the connector condition input screen. Fig. 5 illustrates an example of the connector condition input screen according to the present embodiment. Examples of items of the connector condition input through the connector condition input screen include pin assignment information regarding the transmitting side connector and the receiving side connector, the amplitude of a noise source, a path length of each of transmission paths, and the connector crosstalk ratio of each of the pins.

The occupation ratio computing process is described below.

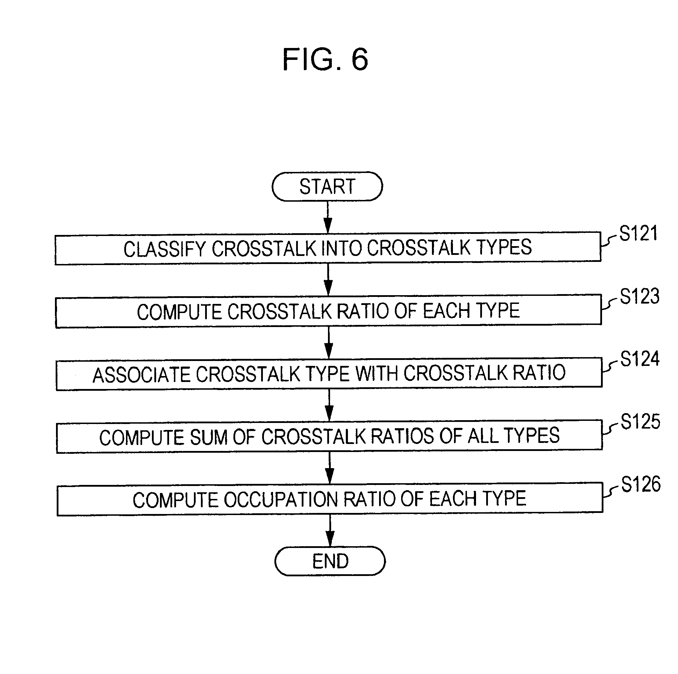

Fig. 6 is a flowchart of an exemplary occupation ratio computing process according to the present embodiment. The computing unit 25 classifies the crosstalk occurring in a target signal transmission system into different types (step S121). At that time, the crosstalk is classified using a direction in which a noise source pin is connected to a noise-sensitive pin and the connection relationship.

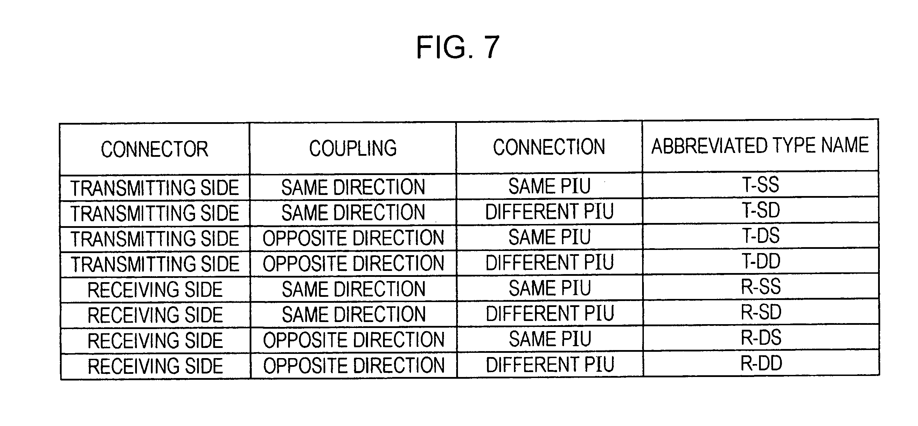

Fig. 7 illustrates a table indicating an example of crosstalk types according to the present embodiment. Each row of this table shows a connector that generates crosstalk (on the receiving side or transmission side), coupling (the same signal direction or not), connection (connected to the same printed board or connected to different printed boards), and the abbreviated name of one of eight crosstalk types. The subsequent drawings schematically illustrate the crosstalk types. In each of the schematic illustrations, two transmission paths are shown. The upper transmission path represents a target net of crosstalk computation, that is, a transmission path subjected to crosstalk noise. The lower transmission path represents a transmission path functioning as a noise source, that is, a transmission path that supplies crosstalk.

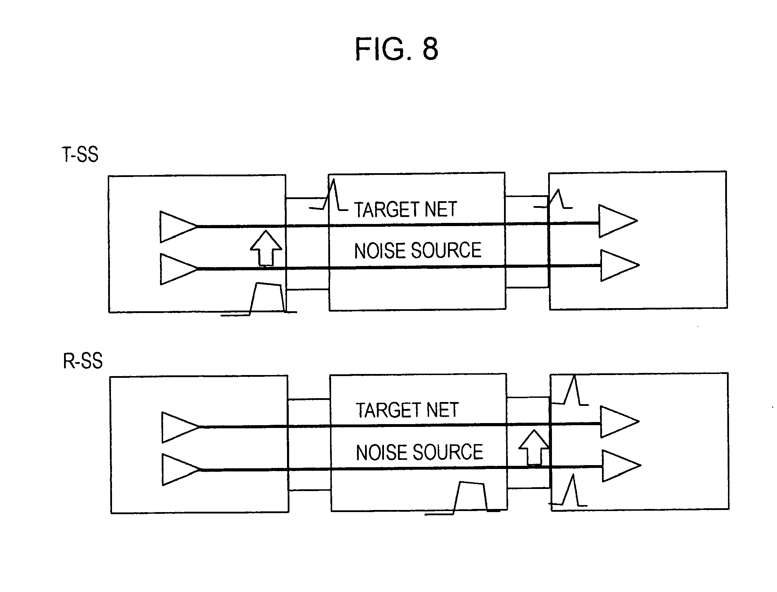

Fig. 8 is a schematic illustration of a crosstalk type T-SS and a crosstalk type R-SS. In Fig. 8, the upper section illustrates the crosstalk type T-SS, and the lower section illustrates the crosstalk type R-SS. Signals of the target net and the noise source are transmitted from the left to right in Fig. 8.

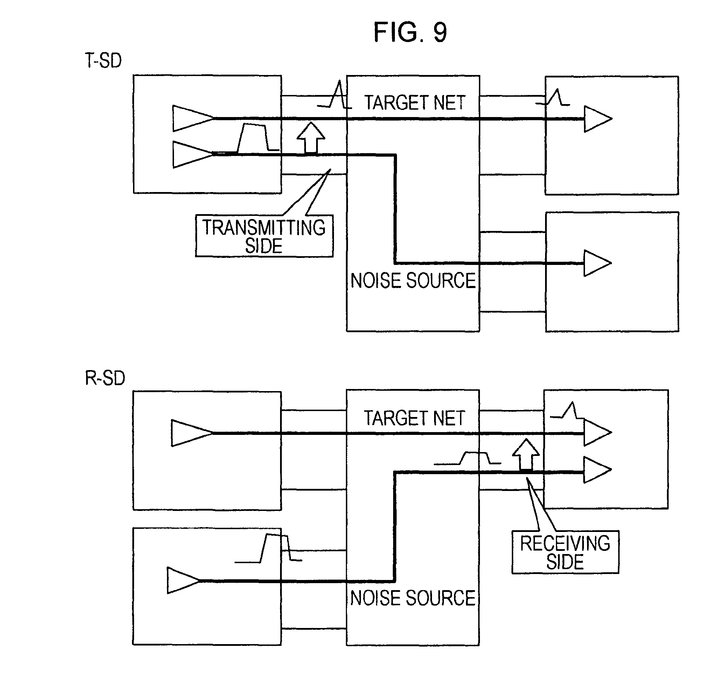

Fig. 9 is a schematic illustration of a crosstalk type T-SD and a crosstalk type R-SD. In Fig. 9, the upper section illustrates the crosstalk type T-SD, and the lower section illustrates the crosstalk type R-SD. Signals of the target net and the noise source are transmitted from the left to right in Fig. 9.

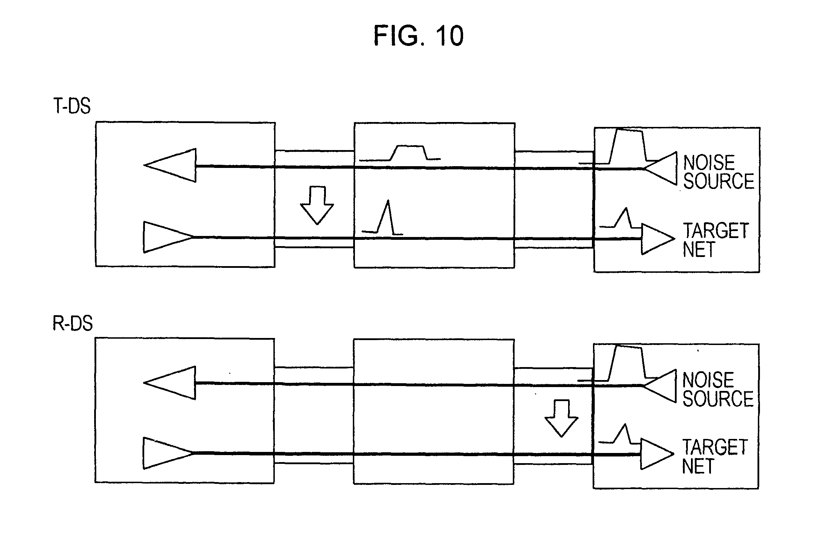

Fig. 10 is a schematic illustration of a crosstalk type T-DS and a crosstalk type R-DS. In Fig. 10, the upper section illustrates the crosstalk type T-DS, and the lower section illustrates the crosstalk type R-DS. A signal of the target net is transmitted from the left to right in Fig. 10, and a signal of the noise source is transmitted from the right to left in Fig. 10.

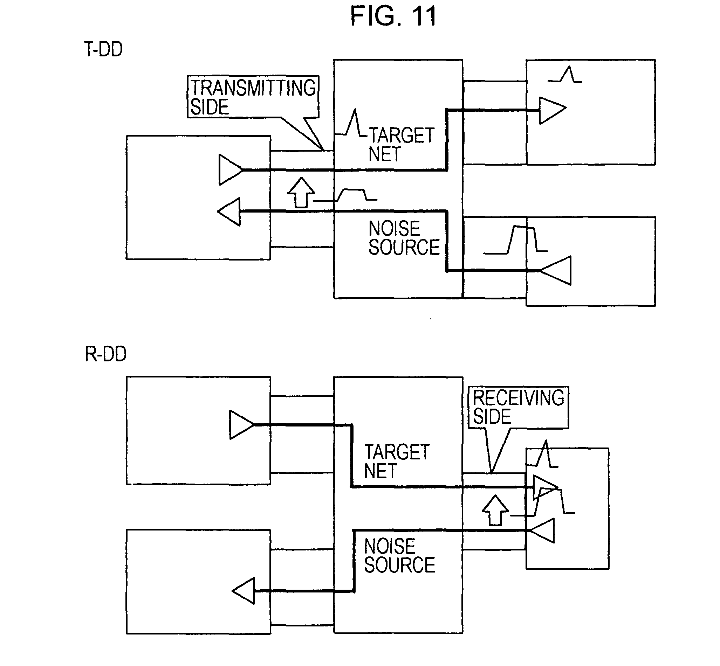

Fig. 11 is a schematic illustration of a crosstalk type T-DD and a crosstalk type R-DD. In Fig. 11, the upper section illustrates the crosstalk type T-DD, and the lower section illustrates the crosstalk type R-DD. A signal of the target net is transmitted from the left to right in Fig. 11, and a signal of the noise source is transmitted from the right to left in Fig. 11.

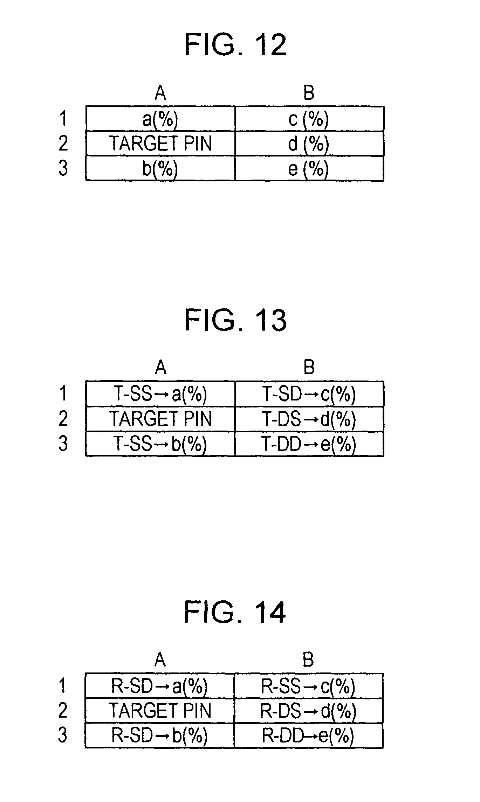

Subsequently, the computing unit 25 computes the crosstalk ratio of each of the crosstalk types (step S123). At that time, the computing unit 25 acquires the pin assignment dependency of the crosstalk ratio input by the user. The amount of crosstalk depends on a physical positional relationship between a signal that supplies noise and a signal that receives the noise in pin arrangement. Fig. 12 is a table illustrating an example of the pin arrangement dependency of the crosstalk ratio according to the present embodiment. In Fig. 12, a pin arrangement of a 6-pin connector is represented by 3 rows and 2 columns. In the table, "A" and "B" represent physical columns of a connector, and "1", "2", and "3" represent physical rows of the connector. The pins other than a target pin, which is a pin of the target net, are noise source pins which are pins of a noise source. The crosstalk ratio of each of the noise source pins is represented by using "%", which is a ratio of the amount of noise to the noise source. In this example, the crosstalk ratios of pins 1A, 1B, 2B, 3A, and 3B are a, b, c, d, and e (%), respectively.

Subsequently, the computing unit 25 associates the crosstalk type with the crosstalk ratio (step S124). The computing unit 25 associates the crosstalk type with the crosstalk ratio for each of pin addresses of the noise source pins using the pin arrangement information for the crosstalk type and information regarding the pin arrangement dependency of the crosstalk ratio.

Fig. 13 is a table illustrating an example of association of the crosstalk type at each of the pins of the transmitting side connector with a crosstalk ratio, according to the present embodiment. In Fig. 13, the association at the noise source pin is represented as "Crosstalk type -> Crosstalk ratio". Fig. 14 is a table illustrating an example of association of the crosstalk type at each of the pins of the receiving side connector with a crosstalk ratio, according to the present embodiment. In Fig. 14, the association at the noise source pin is represented as "Crosstalk type -> Crosstalk ratio".

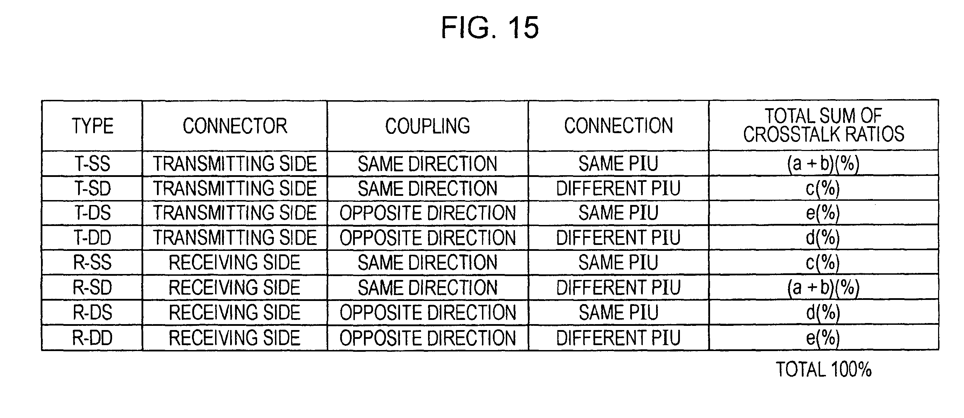

Subsequently, the computing unit 25 computes the total sum of the crosstalk ratios for each of the crosstalk types (step S125). The computing unit 25 computes the total sum of the crosstalk ratios for each of the crosstalk types using the associated crosstalk types and the crosstalk ratios. In addition, the computing unit 25 computes the total sum for all of the crosstalk types. Fig. 15 is a table illustrating an example of the total sum of the crosstalk ratios for each of the crosstalk types. That is, Fig. 15 shows the total sum of the crosstalk ratios computed for each of the crosstalk types. Note that the total sum of all of these total sums of the crosstalk ratios is 100%.

Subsequently, the computing unit 25 computes the occupation ratio of each of the crosstalk types (step S126). Thereafter, this processing flow is completed. The occupation ratio of each of the crosstalk types with respect to the computed total of the crosstalk ratios is computed. The occupation ratio can be computed as follows:

```
The occupation ratio of each of the crosstalk types (%)

= the crosstalk ratio of the crosstalk type (%)/the


total of the crosstalk ratios (%).
```

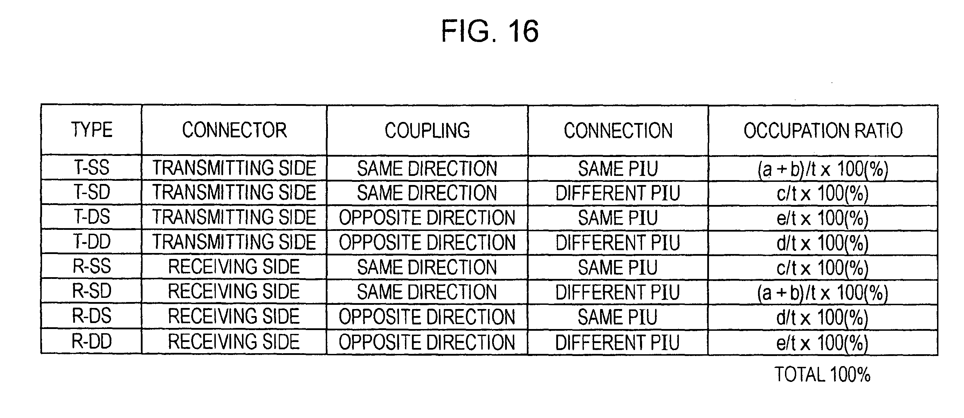

Fig. 16 is a table illustrating an example of the occupation ratio of each of the crosstalk types. That is, Fig. 16 shows the occupation ratio computed for each of the crosstalk types. Note that the total sum of all of the occupation ratios is 100%.

The average noise source amplitude computing process is described below.

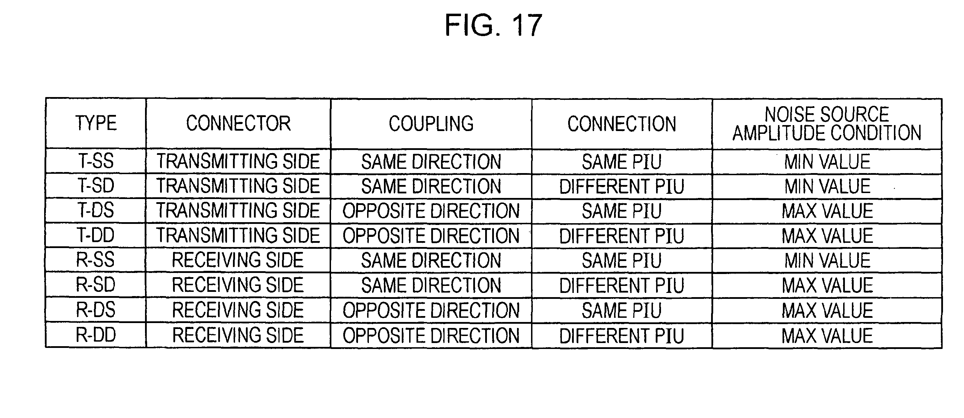

First, the computing unit 25 sets the noise source amplitude for each of the crosstalk types. The amplitudes of noise sources differ in accordance with the crosstalk types. Fig. 17 is a table illustrating an example of the condition of the noise source amplitude for each of the crosstalk types according to the present embodiment. As can be seen from Fig. 17, the noise source amplitude is set to one of the MAX (the maximum value) and the MIN (the minimum value) defined for a connected device.

If a transmitting element of a noise source and a transmitting element of a system that receives noise are mounted in the same PIU, the MIN is set. However, a transmitting element of a noise source and a transmitting element of a system that receives noise are mounted in different PIUs, the MAX is set. Since the system that receives noise is subjected to transmission margin computation, the noise source amplitude is set to the MIN amplitude, which is a worst-case condition. When the noise source is mounted in the same PIU, the voltage is supplied from a power supply mounted on the same board. Accordingly, the noise source amplitude is the MIN. However, when the transmitting element of a noise source and the transmitting element of a system that receives noise are mounted on the same printed board, there is no dependency between the two transmitting elements. Accordingly, even when the output amplitude of the system that receives noise is the MIN, the noise source amplitude is set to the MAX.

Subsequently, the computing unit 25 computes the noise source amplitude (the average of the noise source amplitudes). At that time, the computing unit 25 separates the computed occupation ratios into a group to which the minimum noise source amplitude is to be assigned and a group to which the maximum noise source amplitude is to be assigned. The computing unit 25 then computes the total value (a MIN amplitude occupation ratio or MAX amplitude occupation ratio) of each of the groups. Thereafter, the computing unit 25 computes the amplitude (the integrated noise source amplitude) when the noise sources are integrated into one on the basis of these total values. The integrated noise source amplitude can be computed as follows:

```
The MIN amplitude occupation ratio (%)
```

= the occupation ratio of T-SS (%) + the occupation ratio of T-SD (%)

+ the occupation ratio of R-SS (%)

The MAX amplitude occupation ratio (%)

= the occupation ratio of T-DS (%) + the occupation ratio of T-DD (%)

+ the occupation ratio of R-SD (%) + the occupation ratio of R-DS (%)

+ the occupation ratio of R-DD (%)

The integrated noise source amplitude (V)

= the MIN amplitude (V) × the MIN amplitude occupation ratio (%)/100

+ the MAX amplitude (V) × the MAX amplitude occupation ratio (%)/100

In the above-described noise source amplitude average value, the weighted average values of the MIN amplitudes and the MAX amplitudes for all of the crosstalk types are computed using the occupation ratios.

The average transmission path loss computing process is described next.

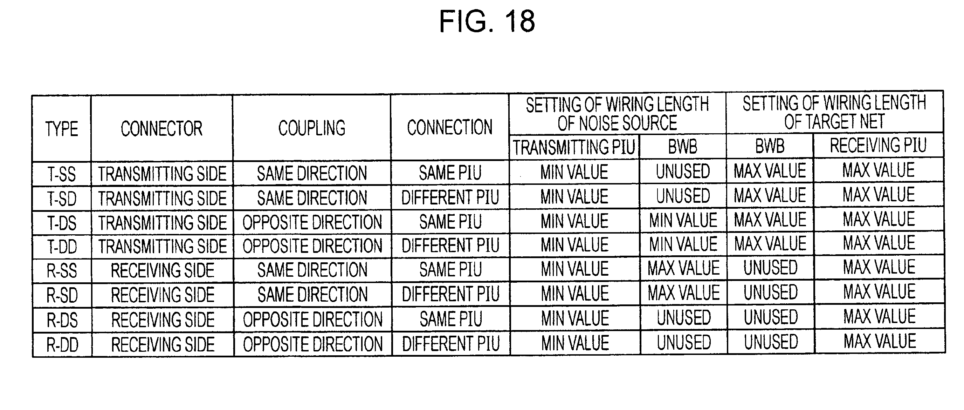

First, the computing unit 25 sets a wiring length for each of the crosstalk types. The wiring length from the transmitting element of the noise source to the connector and the wiring length from the connector to the receiving element vary in accordance with a crosstalk type. Fig. 18 is a table illustrating an example of the wiring length for each of the crosstalk types according to the present embodiment. That is, Fig. 18 shows the wiring length of the noise source system and the wiring length of the target net system for each of the crosstalk types. The wiring length of the noise source system is categorized into two types: the wiring length of the transmitting PIU and the wiring length of the BWB. The wiring length of the target net system is categorized into two types: the wiring length of the BWB and the wiring length of the receiving PIU.

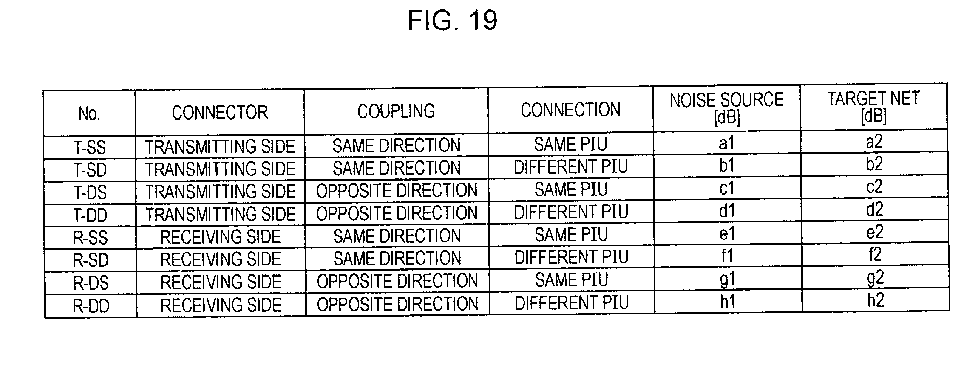

Subsequently, the computing unit 25 computes the wiring loss of the noise source and the wiring loss of the target net. At that time, the computing unit 25 computes the wiring loss corresponding to the set wiring length. The total wiring loss is computed for each of the noise source and the target net. Fig. 19 is a table illustrating an example of the wiring loss for each of the crosstalk types according to the present embodiment. Let a1, b1, c1, d1, e1, f1, g1, and h1 denote the computation results of wiring loss of the noise source for the crosstalk types T-SS, T-SD, T-DS, T-DD, R-SS, R-SD, R-DS, and R-DD, respectively. In addition, let a2, b2, c2, d2, e2, f2, g2, and h2 denote the computation results of wiring loss of the target net for the crosstalk types T-SS, T-SD, T-DS, T-DD, R-SS, R-SD, R-DS, and R-DD, respectively.

Subsequently, the computing unit 25 computes, on the basis of the wiring loss and the occupation ratio of each of the crosstalk types, the loss (the integrated transmission path loss) occurring when the transmission paths are integrated into one. The integrated transmission path loss is computed for each of the noise source and the target net (integrated noise-source transmission path loss and integrated target-net transmission path loss). The integrated noise-source transmission path loss and integrated target-net transmission path loss are computed as follows:

The integrated noise-source transmission path loss

= a1 (dB) × the occupation ratio of T-SS (%)/100

+ b1 (dB) × the occupation ratio of T-SD (%)/100

+ c1 (dB) × the occupation ratio of T-DS (%)/100

+ d1 (dB) × the occupation ratio of T-DD (%)/100

+ e1 (dB) × the occupation ratio of R-SS (%)/100

+ f1 (dB) × the occupation ratio of R-SD (%)/100

+ g1 (dB) × the occupation ratio of R-DS (%)/100

+ h1 (dB) × the occupation ratio of R-DD (%)/100


The integrated target-net transmission path loss

= a2 (dB) × the occupation ratio of T-SS (%)/100

+ b2 (dB) × the occupation ratio of T-SD (%)/100

+ c2 (dB) × the occupation ratio of T-DS (%)/100

+ d2 (dB) × the occupation ratio of T-DD (%)/100


+ e2 (dB) × the occupation ratio of R-SS (%)/100

+ f2 (dB) × the occupation ratio of R-SD (%)/100

+ g2 (dB) × the occupation ratio of R-DS (%)/100

+ h2 (dB) × the occupation ratio of R-DD (%)/100

When each of the integrated noise-source transmission path loss and integrated target-net transmission path loss is computed, the weighted average of the wiring loss for all of the crosstalk types is computed using the occupation ratios of the crosstalk types.

The receiving end noise amplitude computing process is described next.

The setting unit 22 and the waveform simulator 24 perform waveform simulation using the computed integrated transmission path loss so as to compute the attenuation of the noise source waveform and the attenuation of the noise peak waveform. A commercially available waveform simulator can be used as the waveform simulator 24. The receiving end noise amplitude computing process is described in more detail below.

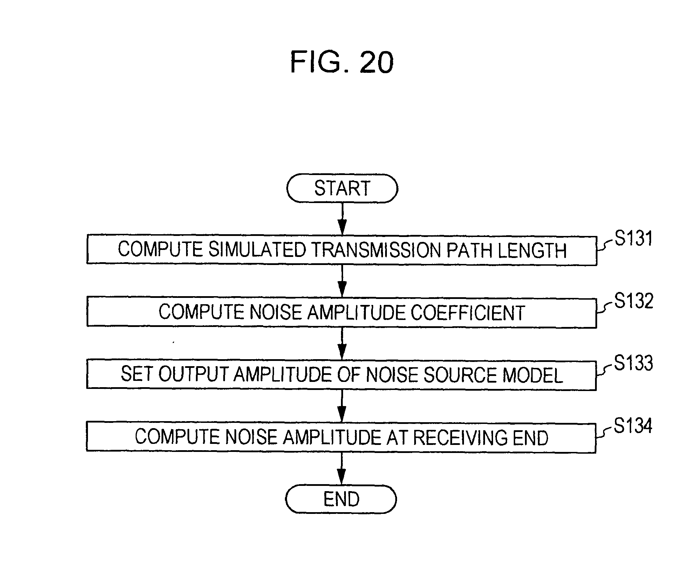

Fig. 20 is a flowchart of an example of the receiving end noise amplitude computing process according to the present embodiment. First, the setting unit 22 computes a wiring length (a simulated wiring length) on the basis of the integrated transmission path loss (step S131). The simulated wiring length can be computed as follows:

$$\text{The simulated wiring length}$$

$$= \text{the integrated transmission path loss/the loss of a}$$

$$\text{transmission model per 1 m}$$

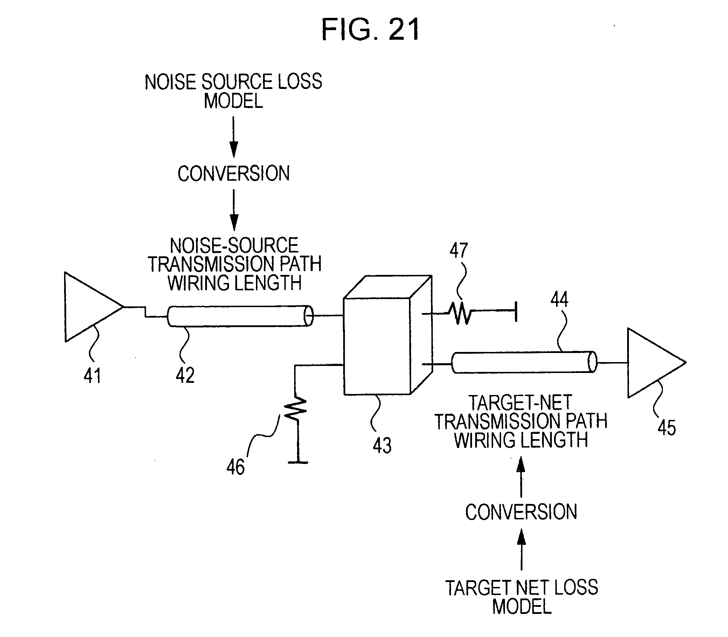

Fig. 21 is a schematic illustration of an example of a simulated transmission path length according to the present embodiment. In Fig. 21, the simulated transmission path length of the noise source transmission path model 42 is considered as the noise source transmission path wiring length, and the simulated transmission path length of the target net transmission path model 44 is considered as the target-net transmission path wiring length. The noise source transmission path wiring length can be obtained by substituting the integrated noise source transmission path loss into the above-described equation. The target net transmission path wiring length can be obtained by substituting the integrated target-net transmission path loss into the above-described equation.

Subsequently, the setting unit 22 computes a noise amplitude coefficient on the basis of the total value of the crosstalk ratios for each of the crosstalk types computed in step S125 (step S132). More specifically, the setting unit 22 sets a coefficient for adjusting the noise source amplitude average value (a noise amplitude coefficient) on the basis of the predetermined crosstalk ratio and total value of the crosstalk ratios of the connector model. The equation for computing the noise amplitude coefficient can be expressed as follows:

$$\text{The noise amplitude coefficient} = \text{the total value of}$$

$$\text{the crosstalk ratios/the crosstalk ratios of the connector}$$

$$\text{model}$$

The equation for computing the noise source amplitude can be expressed as follows:

$$\text{The noise source amplitude} = \text{the noise source amplitude}$$

$$\text{average value} \times \text{the noise amplitude coefficient}$$

In existing methods, the connector crosstalk is set by changing the wiring spacing in a model and adjusting the electrical coupling level. However, since this operation is complicated, much man power is required. Therefore, in order to automatically perform this operation, complicated computation is required.

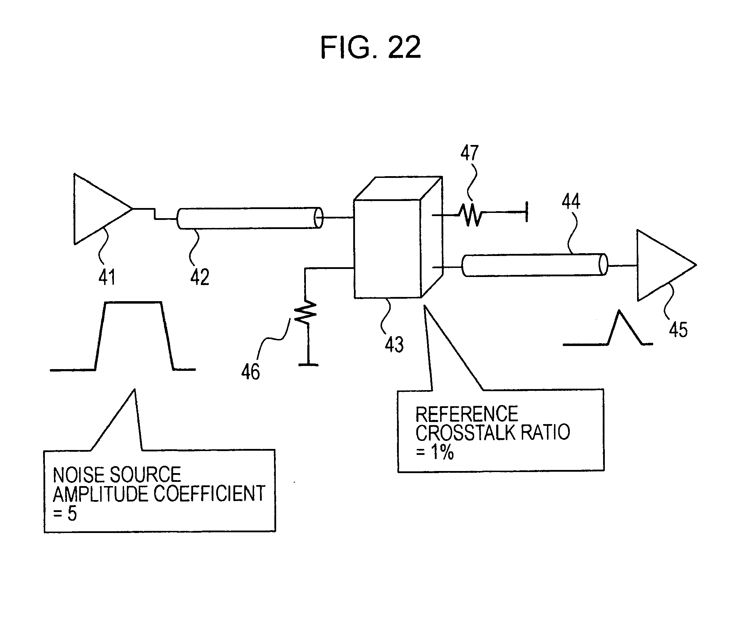

According to the present embodiment, the connector crosstalk can be set using simplified ratio computation by employing a method in which the crosstalk ratio (a reference crosstalk ratio) set for a connector model is made constant, and a desired crosstalk ratio is obtained by adjusting the noise source amplitude. Consequently, the amount of computation can be advantageously reduced. Fig. 22 is a schematic illustration of an example of setting of a crosstalk ratio according to the present embodiment. In this example, by setting the reference crosstalk ratio of the connector model 43 to 1% and setting the noise source amplitude coefficient of the noise source model 41 to 5, a final crosstalk ratio of 1% x 5 = 5% can be obtained.

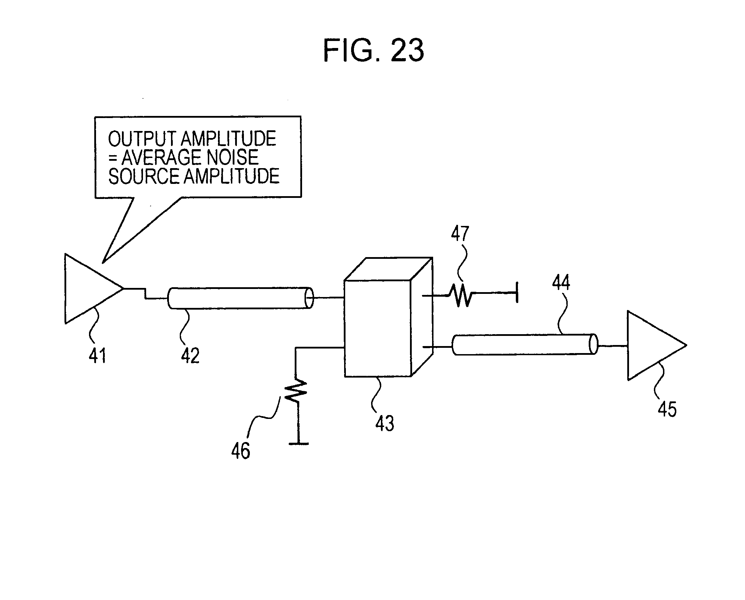

Subsequently, the setting unit 22 sets the output amplitude of the noise source model to the noise source amplitude average value computed through the noise source amplitude average value computing process (step S133). Fig. 23 is a schematic illustration of an example of setting of a noise source model according to the present embodiment. The output amplitude of the noise source model 41 is set to the noise source amplitude average value.

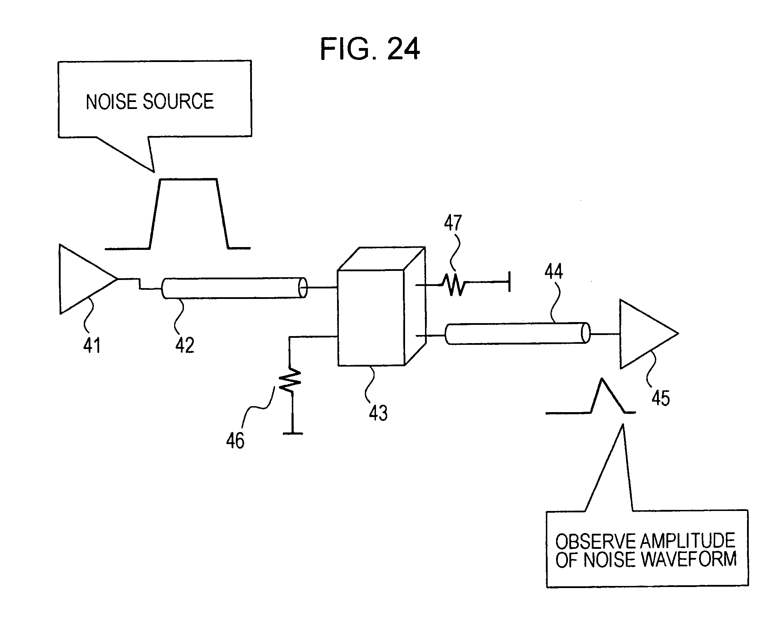

Subsequently, the waveform simulator 24 performs waveform simulation so as to compute the amplitude of a noise waveform at the receiving end (i.e., an amount of received noise) (step S134). Thereafter, this processing flow is completed. Fig. 24 is a schematic illustration of an example of computation of the amplitude of a noise waveform according to the present embodiment. In a waveform observing model serving as a receiving end, the amplitude of a noise waveform can be observed.

Note that if the amplitude of a noise waveform is smaller than or equal to a predetermined amplitude, the computing unit 25 may determine that the quality of the signal transmission system passes the test. However, if the amplitude of a noise waveform is larger than the predetermined amplitude, the computing unit 25 may determine that the quality of the signal transmission system fails the test.

By using the connector crosstalk computing process according to the present embodiment, the connector crosstalk can be obtained with a small amount of computation. Accordingly, the efficiency of evaluating the reliability of signal transmission can be significantly increased.

Note that, in the connector crosstalk computing process according to the present embodiment, the following signal attenuation computing process, a wire coupling connector model, and a frequency characteristic connector model may be employed.

The signal attenuation computing process is described below.

The amount of noise computed through the connector crosstalk computing process is transmitted to the receiving element via a transmission path connected to the connector. At that time, the signal is attenuated due to transmission loss. This phenomenon can be computed using a widely used waveform simulator. However, the amount of computation is large, and the setting operation is troublesome. Accordingly, a significant amount of user's working time is required.

According to the present embodiment, by employing a signal attenuation computing process in which approximate calculation is performed using a noise database based on a waveform simulation result obtained in advance, the amount of computation can be significantly reduced. The signal attenuation computing process can be realized by using widely used spreadsheet software. Accordingly, the signal attenuation computing process can be easily realized. In such a case, the connector crosstalk computing process can be performed without using the waveform simulator 24.

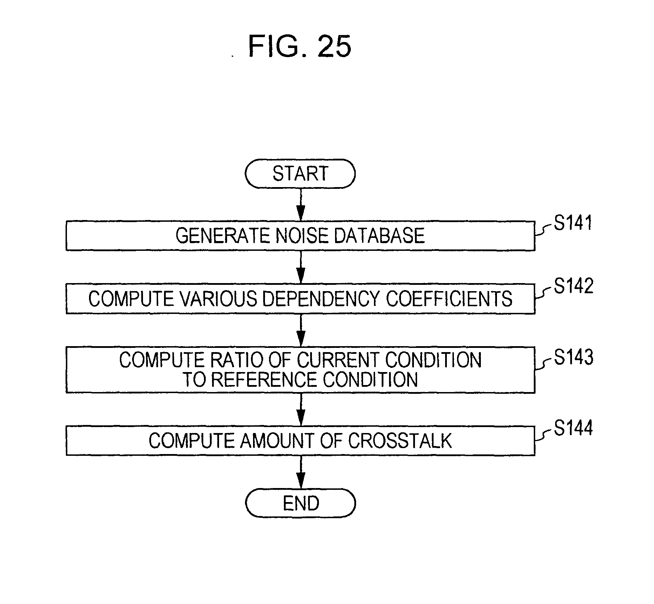

Fig. 25 is a flowchart of an exemplary signal attenuation computing process according to the present embodiment. First, the computing unit 25 generates a noise database including a waveform simulation result regarding the attenuation of a noise source and a noise waveform due to the transmission loss (step S141). In order to compute each dependency coefficient described below, the noise database is generated by including sufficient changes in the conditions. In the present embodiment, the condition of the noise database generation is determined so that, for one item, the conditions of two different items are changed. A commercially available waveform simulator can be used as the waveform simulator 24 that computes values included in the actual database.

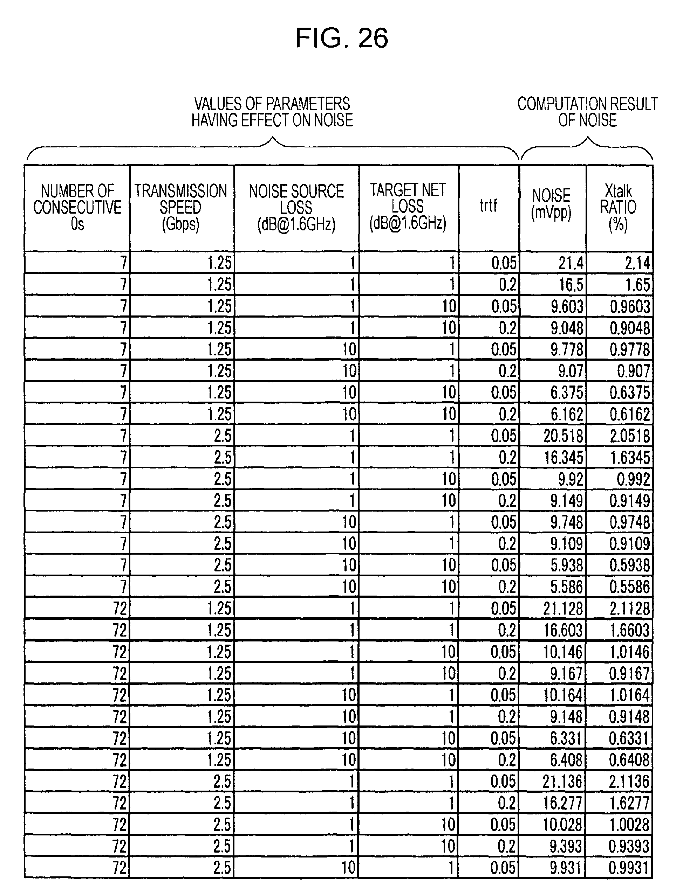

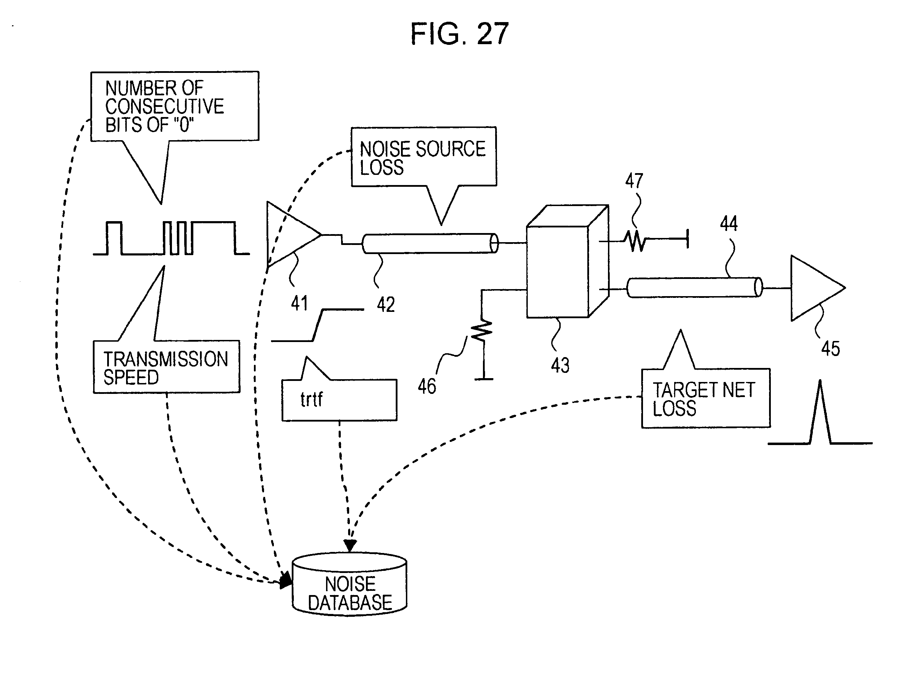

Fig. 26 is a table illustrating an example of the noise database according to the present embodiment. The noise database indicates parameters having an effect on noise and the computation results of the amount of noise. Fig. 27 is a schematic illustration of examples of parameters having an effect on noise according to the present embodiment. Examples of parameters having an effect on noise include the number of consecutive "0" bits ("consecutive 0s"), a transmission speed, noise source loss, target net loss, and trtf. The items of the result of computing the amount of noise are noise and a crosstalk (Xtalk) ratio.

Subsequently, the computing unit 25 computes various dependency coefficients (step S142). Examples of the dependency coefficients include a transmission speed dependency coefficient, a trtf dependency coefficient, a number-of-consecutive 0-bits dependency coefficient, a target net transmission loss dependency coefficient, and a noise source transmission loss dependency coefficient.

The transmission speed dependency coefficient is described next. A noise source waveform is attenuated from a time when the noise source waveform is output from the transmitting element to a time when the noise source waveform arrives at the connector via a transmission path. The attenuation depends on the loss along the transmission path. The loss along the transmission path depends on a signal transmission speed. Accordingly, the corresponding coefficient needs to be obtained. A transmission speed dependency coefficient determined by extracting a plurality of conditions from the noise database and using the results of computing the amount of noise under the extracted conditions serves as the coefficient. In order to determine the transmission speed dependency coefficient, a plurality of conditions having the same items except for the transmission speed need to be extracted. From among a plurality of dependency coefficients obtained using the plurality of conditions, the dependency coefficient that maximizes the noise is selected. In this case, expressions for computing a transmission speed dependency coefficient when two conditions are extracted are given as follows:

```
    Tentative transmission speed dependency coefficient A

  = (the amount of noise at a condition-A transmission speed A

  - the amount of noise at a condition-B transmission speed

  B)/(the transmission speed A - the transmission speed B)
```

$$\text{Tentative transmission speed dependency coefficient B}$$

$$= \text{(the amount of noise at a condition-B transmission speed A}$$

$$- \text{the amount of noise at a condition-B transmission speed}$$

$$\text{B)/(the transmission speed A} - \text{the transmission speed B)}$$

$$\text{Transmission speed dependency coefficient}$$

$$= \text{MAX(the tentative transmission speed dependency}$$

$$\text{coefficient A, the tentative transmission speed dependency}$$

$$\text{coefficient B)}$$

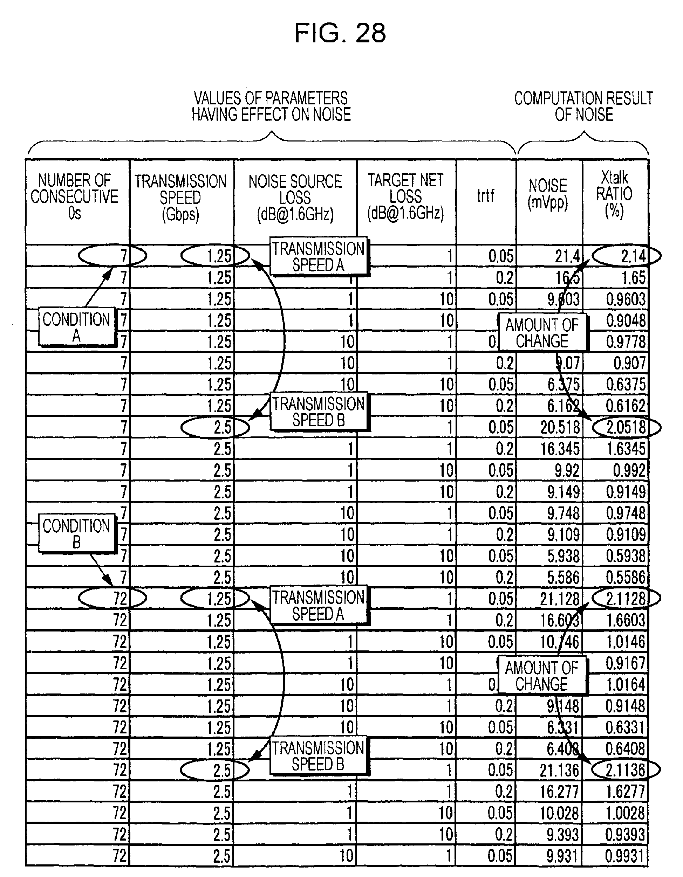

Fig. 28 is a table illustrating an example of selection of conditions for determining the transmission speed dependency coefficient in the noise database according to the present embodiment. In this example, an example of selection of a combination of two conditions (the conditions A and B) and two transmission speeds (the transmission speeds A and B) is shown.

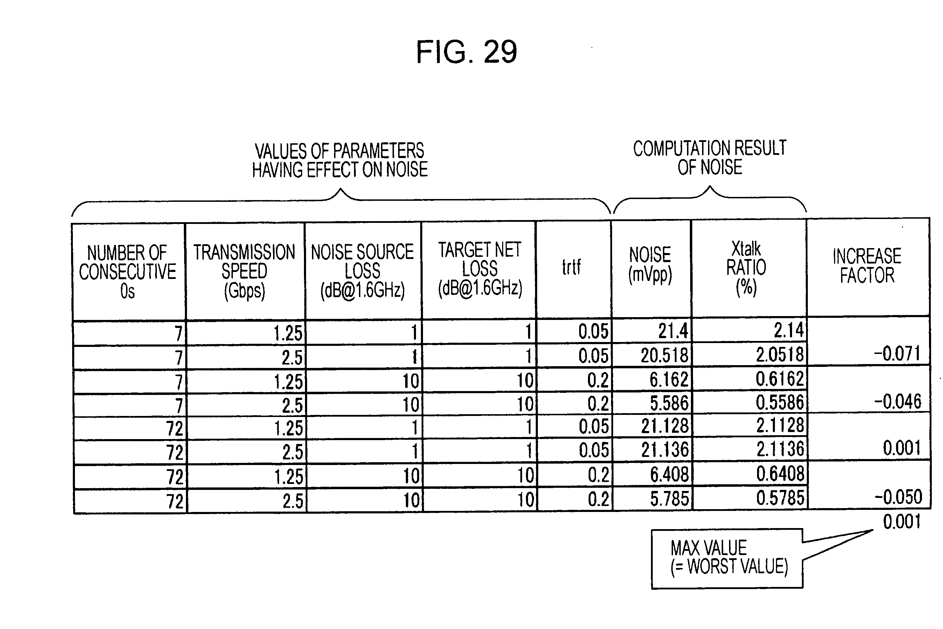

Fig. 29 is a table illustrating an example of a computing result of a transmission speed dependency coefficient according to the present embodiment. In this example, four conditions are used, and the transmission speed dependency coefficient of each of the conditions is computed using two different transmission speeds of the condition. Thereafter, from among the transmission speed dependency coefficients of the four conditions, a maximum value (the worst value) is selected.

The trtf dependency coefficient is described next. It is known that as a high-frequency component included in a noise source increases, the noise peak value of the crosstalk occurring in a connector increases. In addition, the high-frequency component included in a noise source increases as the rise time and the fall time (hereinafter referred to as "trtf") decrease. In the present embodiment, in order to estimate the amount of noise, the effect of the trtf is used as a trtf dependency coefficient. Like the above-described transmission speed dependency coefficient, the trtf dependency coefficient is computed using the noise database.

The number-of-consecutive 0-bits dependency coefficient is described next. A bit pattern of transmitted data varies in accordance with a protocol used for a corresponding signal. One of the factors that affect connector crosstalk is the number of consecutive bits of the same value. If the number is large, the frequency is locally decreased in that portion and, therefore, the loss is decreased. Accordingly, the amplitude increases. That is, for the noise source, the crosstalk increases. According to the present embodiment, this effect is included in the computation expression as the number-of-consecutive 0-bits dependency coefficient. Like the above-described transmission speed dependency coefficient, the number-of-consecutive 0-bits dependency coefficient is computed using the noise database.

The target-net transmission loss dependency coefficient is described next. Crosstalk occurring in the connector is transmitted to the input terminal of the receiving element via a transmission path connected to the connector. At that time, the peak value of the noise waveform that reaches the input terminal decreases as the loss of the transmission path increases. According to the present embodiment, this effect is included in the computation expression using the target-net transmission loss dependency coefficient. Like the above-described transmission speed dependency coefficient, the target-net transmission loss dependency coefficient is computed using the noise database. Similarly, the effect of transmission loss on the noise source amplitude is included in the computation expression using the noise source transmission loss dependency coefficient.

Subsequently, the computing unit 25 computes a ratio of the condition to be processed through the signal attenuation computing process to a predetermined reference condition (step S143). First, the computing unit 25 sets, using the above-described dependency coefficients, initial values used for computing the noise peak value of the noise waveform that reaches the receiving element. Any values can be selected for the initial values from the noise database. The condition corresponding to the initial value of each of the above-described dependency coefficients is present. The computing unit 25 presets the initial values as reference conditions. The computing unit 25 computes the noise peak value of the noise waveform that reaches the receiving element using a variation from the reference condition and the dependency coefficient for each of the items.

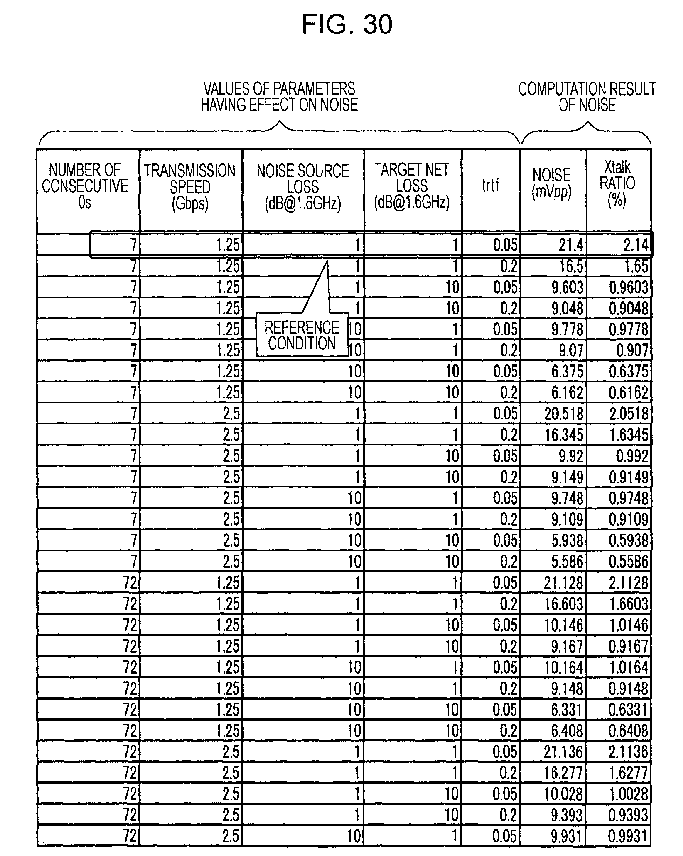

Fig. 30 is a table illustrating an example of a reference condition contained in the noise database according to the present embodiment. In Fig. 30, an example of selection of a reference condition contained in the above-described noise database is illustrated.

Subsequently, the computing unit 25 computes the difference between the condition values in the reference condition and the current condition for each of the parameters having an effect on the noise. The expression for computing the condition difference is given as follows:

$$\text{The condition value difference = (the condition value under the current condition) - (the condition value under the reference condition)}$$

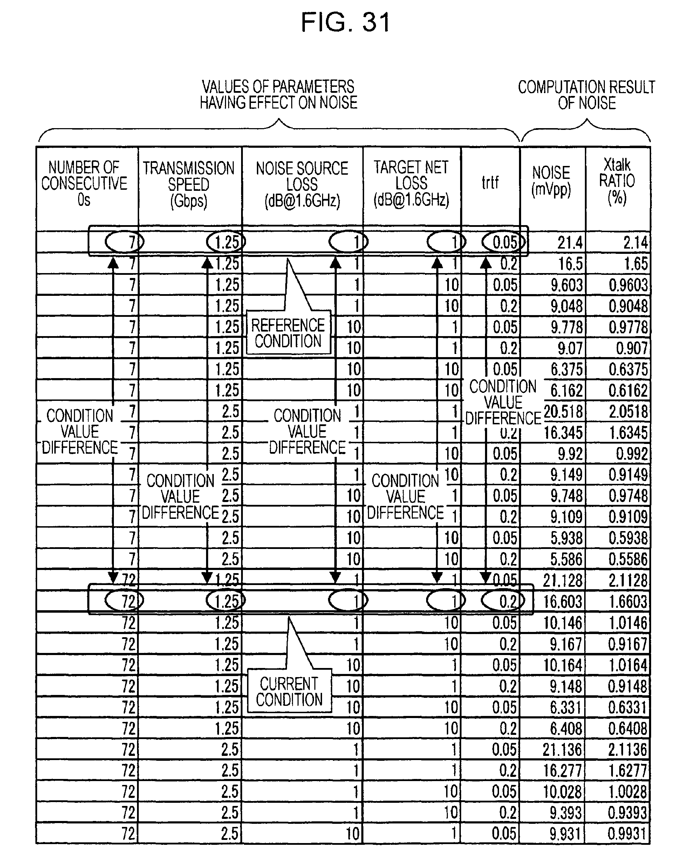

The computing unit 25 computes the condition value difference for each of the parameters having an effect on the noise. Fig. 31 is a table illustrating the current condition and the reference condition contained in the noise database according to the present embodiment. In Fig. 31, an example of selection of the current condition and the reference condition contained in the above-described noise database is illustrated.

Subsequently, the computing unit 25 computes a crosstalk ratio (step S144). Thereafter, this processing flow is completed. The computing unit 25 then computes an increase in the crosstalk ratio for each of the parameters using the computed condition value difference. The expression for computing the increase in the crosstalk ratio is given as follows:

$$\text{The increase in the crosstalk ratio for each parameter = (the dependency coefficient of the parameter) × (the condition value difference)}$$

Subsequently, the computing unit 25 multiplies the amount of noise under the reference condition by a total ratio so as to obtain a final amount of noise (a total crosstalk ratio) that reaches the receiving element. The expression for computing the total crosstalk ratio is given as follows:

$$\text{The total crosstalk ratio = (the crosstalk ratio under the reference condition) × (the increase in crosstalk ratio at the transmission speed) × (the increase in crosstalk ratio caused by the number of consecutive 0-bits) × (the increase in crosstalk ratio caused by the noise source loss) × (the increase in crosstalk ratio caused by trtf)}$$

Subsequently, the computing unit 25 computes the amount of crosstalk using the total crosstalk ratio. The expression for computing the amount of crosstalk is given as follows:

$$\text{The amount of crosstalk}$$

$$= \text{the total crosstalk ratio} \times \text{the noise source amplitude}$$

The connector crosstalk computing process is described in detail below.

In order to integrate the connector crosstalk computing process according to the present embodiment into an existing waveform analysis program, the implementation requires a large amount of man-hours. However, the connector crosstalk computing process can be realized by using commercially available spreadsheet software. Accordingly, the computation expressions of the present embodiment may be written using a spreadsheet program. Thereafter, the written computation expressions may be input to existing waveform analysis program in the form of a card. Thus, only required values may be input to the waveform analysis program. By realizing the connector crosstalk computing process using a card in this manner, the man-hour requirement for development of the function can be significantly reduced. In addition, the connector crosstalk computing process can be integrated into a variety of waveform analysis programs and, therefore, the versatility of the connector crosstalk computing process can be increased.

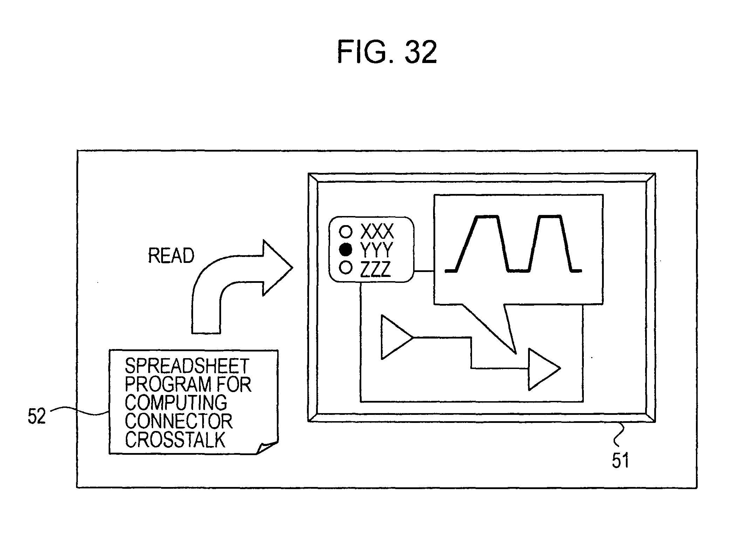

Fig. 32 is a schematic illustration of an example of a waveform analysis program according to the present embodiment. The waveform analysis program includes a main waveform analysis program 51 and a connector crosstalk computing spreadsheet program 52 in the form of a card. By reading the connector crosstalk computing spreadsheet program 52 thereinto, the main waveform analysis program 51 can integrate the connector crosstalk computing process thereinto.

The wire coupling connector model is described below.

Since crosstalk occurring in a connector varies in accordance with the arrangement of connector pins and the physical structure of the connector, it is difficult to represent the connector as a simulation model. In general, a multi-port circuit simulator model is used. However, since the multi-port circuit simulator model is a largescale model, a large amount of time is required for computation. In addition, in general, when the multi-port circuit simulator model includes a through-hole, the accuracy of simulation is not verified in detail.

In contrast, by using a connector model of a wire coupling type and expressing the crosstalk ratio using an approximate expression derived from the spacing between the wires, the connector model can be easily created. In addition, the accuracy within an allowable range can be obtained.

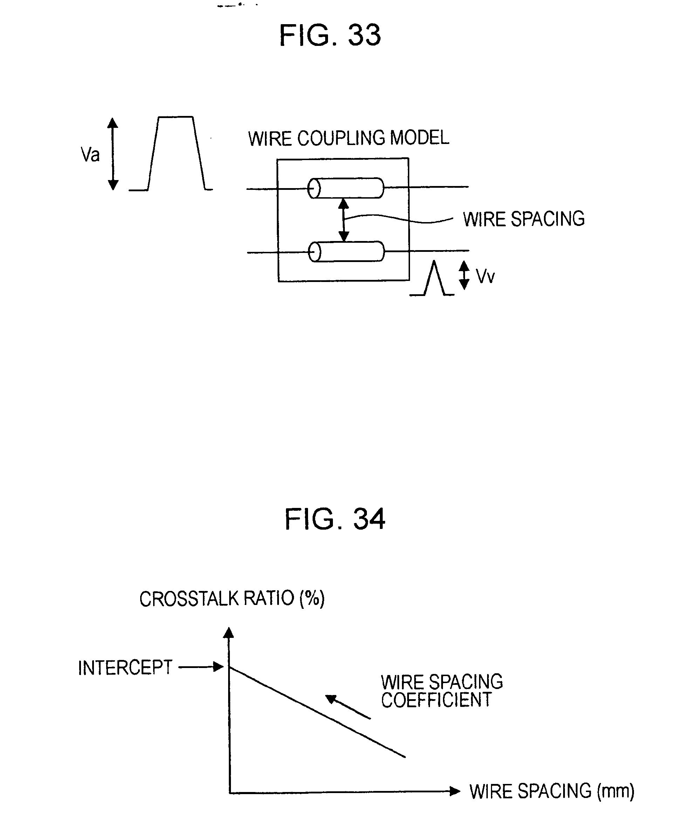

Fig. 33 is a schematic illustration of an example of a wire coupling connector model according to the present embodiment. Let Vv denote the noise source amplitude, and let Va denote the noise amplitude in the target net. Then, the crosstalk ratio can be expressed as follows:

$$\text{The crosstalk ratio (\%)} = Vv/Va \times 100$$

Fig. 34 is a schematic illustration of an example of a method for determining a wire spacing in a wire coupling connector model according to the present embodiment. The line shown in Fig. 34 is expressed as follows:

$$\text{The crosstalk ratio (\%)}$$

$$= \text{the wire spacing coefficient} \times \text{the wire spacing (mm)} + \text{the}$$

$$\text{intercept (mm)}$$

By using this expression, the following expression for determining the wire spacing using the crosstalk ratio can be obtained:

$$\text{The wire spacing (mm)}$$

$$= \text{(the crosstalk ratio (\%) - the intercept (mm))/the wire}$$

$$\text{spacing coefficient}$$

This expression indicates that, by determining the wire spacing using the crosstalk ratio as an input condition, a connector model having a desired crosstalk ratio can be obtained. By acquiring the crosstalk ratio from, for example, a reliable measurement result, the accuracy within an allowable range can be provided.

The frequency characteristic connector model is described below.

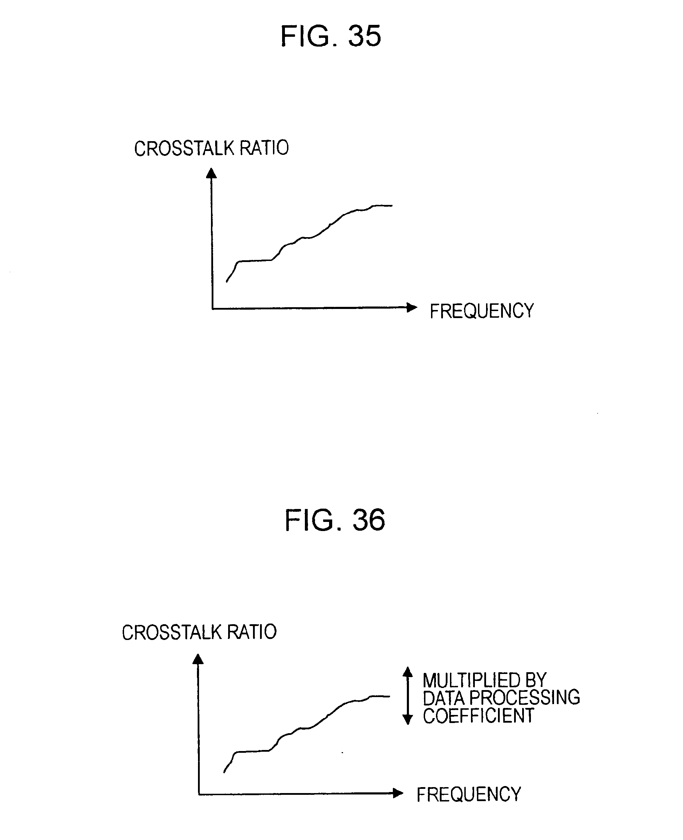

The crosstalk ratio of a connector is effected by, for example, trtf of the input noise source waveform. The characteristic of the connector can be represented using the frequency characteristic. Accordingly, by using a frequency characteristic acquired by, for example, actual measurement as a reference characteristic and computing the ratio with respect to the reference characteristic, an accurate connector model can be obtained. Fig. 35 is a schematic illustration of an example of the reference characteristic of a connector according to the present embodiment. In Fig. 35, the abscissa represents the frequency, and the ordinate represents the crosstalk ratio.

Note that the frequency characteristic acquired through, for example, actual measurement cannot be used as the above-described reference crosstalk ratio. Accordingly, some modification of the frequency characteristic is required in advance so that a desired crosstalk ratio is obtained as follows:

$$\text{The frequency characteristic of a connector model = the}$$

$$\text{reference characteristic} \times \text{the data processing coefficient}$$

$$\text{The data processing coefficient}$$

$$= \text{the crosstalk ratio (\%) input as a condition}$$

$$\text{/the crosstalk ratio (\%) in a reference characteristic}$$

Fig. 36 is a schematic illustration of an example of the frequency characteristic of a connector model according to the present embodiment. The frequency characteristic of the connector model is obtained by multiplying the above-described reference characteristic by the data processing coefficient.

By using the connector crosstalk computing process according to the present embodiment, the connector crosstalk can be computed within an allowable time period of a general design schedule.

Note that, in the signal transmission system evaluating apparatus according to the present embodiment, a user may determine the layout of a transmitting device, a receiving device, a board, a connector, and a transmission path of the target signal transmission system through the UI unit 21.

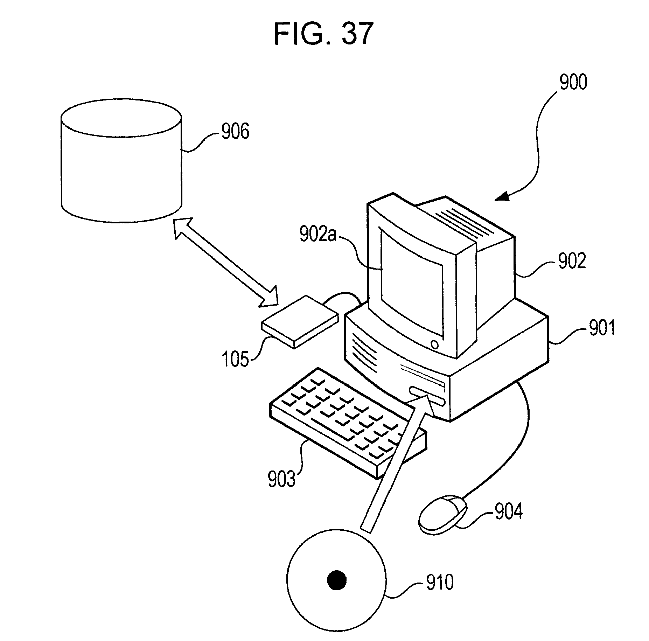

The present invention is applicable to the following computer system. Fig. 37 illustrates an example of a computer system to which the present invention is applicable. As shown in Fig. 37, a computer system 900 includes a main body 901 incorporating, for example, a central processing unit (CPU) and a disk drive, a display 902 for displaying an image in response to an instruction received from the main body 901, a keyboard 903 that allows various information to be input therethrough, a mouse 904 used for pointing a desired location in a display screen 902a of the display 902, and a communication unit 905 used for accessing, for example, an external database and downloading, for example, a program stored in a different computer system. For example, a network communication card or a modem is used as the communication unit 905.

For the above-described computer system serving as the signal transmission system evaluating apparatus, a program that causes the computer system to execute the above-described processing steps can be provided as a signal processing system evaluating program. By storing this program in a recording medium that is readable by the computer system, the program can be executed by the computer system serving as the signal transmission system evaluating apparatus. The program that causes the computer system to execute the above-described processing steps is stored in a removable recording medium, such as a disk 910 or is downloaded from a recording medium 906 of a different computer system using the communication unit 905. In addition, the signal processing system evaluating program that allows the computer system 900 to have at least a function for evaluating a signal transmission system is input to the computer system 900 and is compiled. This program allows the computer system 900 to operate as a signal transmission system evaluating apparatus having a function for evaluating a signal transmission system. Alternatively, this program may be stored in a computer-readable recording medium, such as the disk 910. Examples of the recording medium that is readable by the computer system 900 include an internal memory unit, such as a read only memory (ROM) or a random access memory (RAM), and a removable recording medium, such as the disk 910, a flexible disk, a digital versatile disc (DVD), a magnetooptical disk, or an IC card, a database that stores computer programs, and a different computer system and its database, and a variety of recording media connected using communication means, such as the communication unit 905, and accessible by the computer system.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment (s) of the present invention has(have) been described in detail, it should be understood that the various changes, substitutions, and alterations could be made hereto without departing from scope of the invention.

**Claims**

1. A evaluating apparatus for evaluating a signal transmission system, the signal transmission system including a first transmission path that transmits a signal via a predetermined pin in a connector and a second transmission path that transmits a signal via a pin other than the predetermined pin in the connector, comprising:

   a parameter acquiring unit (21, 22, 26) configured to acquire one of types of crosstalk categorized by a positional relationship between the first transmission path and the second transmission path and a crosstalk ratio representing a ratio of a level of crosstalk provided from the second transmission path to the first transmission path for each of the pins of the second transmission path to a level of total crosstalk;
   an occupation ratio computing unit (25) configured to compute an occupation ratio of the crosstalk for each of the types with respect to all of the crosstalk supplied to the first transmission path in the connector on the basis of the types of crosstalk and the crosstalk ratios acquired by the parameter acquiring unit (21, 22, 26);
   a noise source output computing unit (25) configured to compute a noise source output representing an output of a noise source in the second transmission path on the basis of the occupation ratio for each of the types of crosstalk computed by the occupation ratio computing unit (25);
   a loss computing unit (25) configured to compute first transmission path loss representing loss of the first transmission path and second transmission path loss representing loss of the second transmission path on the basis of the occupation ratio for each of the types of crosstalk computed by the occupation ratio computing unit (25); and
   a received noise computing unit (24, 25) configured to compute an amount of received noise representing an amount of noise received at a receiving end of the first transmission path on the basis of the noise source output computed by the noise source output computing unit (25) and the first transmission path loss and the second transmission path loss computed by the loss computing unit (25).

2. The evaluating apparatus according to Claim 1, wherein the noise source output computing unit (25) is operable to obtain the noise source output by weighting an output of the noise source of each type of crosstalk by using an occupation ratio of the type of crosstalk and averaging the weighted outputs.

3. The evaluating apparatus according to Claim 1 or 2, wherein the loss computing unit (25) is operable to compute the first transmission path loss by weighting loss of the first transmission path for each type of crosstalk by using an occupation ratio of the type of crosstalk and averaging the weighted loss of all types of crosstalk, and wherein the loss computing unit (25) is operable to compute the second transmission path loss by weighting loss of the second transmission path for each type of crosstalk by using the occupation ratio of the type of crosstalk and averaging the weighted loss of all types of crosstalk.

4. The evaluating apparatus according to Claim 1, 2 or 3, wherein the received noise computing unit (24, 25) is operable to compute the amount of received noise by performing waveform simulation on the basis of the noise source output computed by the noise source output computing unit (25) and the first transmission path loss and second transmission path loss computed by the loss computing unit (25).

5. The evaluating apparatus according to Claim 4, wherein the received noise computing unit (24, 25) is operable to employ a wire coupling connector model for a connector model used in the waveform simulation, and wherein, on the basis of a relational expression between a wire spacing of the connector model and the crosstalk ratio, the received noise computing unit (24, 25) is operable to compute the wire spacing using the crosstalk ratio and set the computed wire spacing in the connector model.

6. The evaluating apparatus according to Claim 4 or 5, wherein the received noise computing unit (24, 25) is operable to acquire a frequency characteristic serving as a reference of the connector model in the waveform simulation, and wherein the received noise computing unit (24, 25) is operable to multiply the frequency characteristic by a predetermined coefficient and set the resulting value in the model as a frequency characteristic of the model.

7. The system evaluating apparatus according to Claim 1, 2 or 3, wherein the received noise computing unit (24, 25) includes a database (26) that stores a plurality of different simulation conditions and received noise states computed through waveform simulation performed for each of the simulation conditions, and wherein the received noise computing unit (24, 25) is operable to compute the amount of received noise by using the database (26).

8. The evaluating apparatus according to Claim 7, wherein the received noise computing unit (24, 25) is operable to obtain a relational expression regarding the plurality of simulation conditions in the database (26) and compute the amount of received noise on the basis of the conditions of the signal transmission system and the relational expression.

9. The evaluating apparatus according to any preceding Claim, wherein the parameter acquiring unit (21, 22, 26) is operable to further acquire a noise source output coefficient representing a coefficient to be multiplied with the noise source output, and wherein the noise source output computing unit (25) is operable to multiply the noise source output by the noise source output coefficient.

10. A recording medium storing a evaluating program for signal transmission system, the signal transmission system evaluating program causing a computer to evaluate a signal transmission system, the signal transmission system including a first transmission path that transmits a signal via a predetermined pin in a connector and a second transmission path that transmits a signal via a pin other than the predetermined pin in the connector, the program causing the computer to perform the steps of:

   acquiring one of types of crosstalk categorized by a positional relationship between the first transmission path and the second transmission path and a crosstalk ratio representing a ratio of a level of crosstalk provided from the second transmission path to the first transmission path for each of the pins of the second transmission path to a level of total crosstalk (S111);
   computing an occupation ratio of the crosstalk for each of the types with respect to all of the crosstalk supplied to the first transmission path in the connector on the basis of the acquired types of crosstalk and crosstalk ratios (S112);
   computing a noise source output representing an output of a noise source in the second transmission path on the basis of the computed occupation ratio for each of the types of crosstalk (S113);
   computing first transmission path loss representing loss of the first transmission path and second transmission path loss representing loss of the second transmission path on the basis of the computed occupation ratio for each of the types of crosstalk (S114); and
   computing an amount of received noise representing an amount of noise received at a receiving end the first transmission path on the basis of the computed noise source output, the computed first transmission path loss, and the computed second transmission path loss (S115).

11. The recording medium according to Claim 10, wherein the program further causes the computer to perform the step of obtaining the noise source output by weighting an output of the noise source of each type of crosstalk by using an occupation ratio of the type of crosstalk and averaging the weighted outputs.

12. The recording medium according to Claim 10 or 11, wherein the program further causes the computer to perform the step of computing the first transmission path loss by weighting loss of the first transmission path for each type of crosstalk by using an occupation ratio of the type of crosstalk and averaging the weighted loss of all types of crosstalk, and the step of computing the second transmission path loss by weighting loss of the second transmission path for each type of crosstalk by using the occupation ratio of the type of crosstalk and averaging the weighted loss of all types of crosstalk.

13. The recording medium according to Claim 10, 11 or 12, wherein the program further causes the computer to perform the step of computing the amount of received noise by performing waveform simulation on the basis of the computed noise source output, the computed first transmission path loss, and the computed second transmission path loss.

14. The recording medium according to Claim 10, 11, 12 or 13, wherein the program further causes the computer to perform the steps of employing a wire coupling connector model for the connector model used in the waveform simulation and computing, on the basis of a relational expression between a wire spacing of the connector model and the crosstalk ratio, the wire spacing from the crosstalk ratio, and setting the computed wire spacing in the connector model.

15. The recording medium according to Claim 13, wherein the program further causes the computer to perform the steps of acquiring a frequency characteristic serving as a reference of the connector model in the waveform simulation, multiplying frequency characteristic by a predetermined coefficient, and setting the resulting value in the model as a frequency characteristic of the model.

16. The recording medium according to Claim 10, 11 or 12, or Claim 14 when read as appended to Claim 10, 11 or 12, wherein the program further causes the computer to perform the steps of including a database (26) that stores a plurality of different simulation conditions and received noise states computed through waveform simulation performed for each of the simulation conditions and computing the amount of received noise by using the database (26).

17. A method for evaluating a signal transmission system for use in a computer, the signal transmission system including a first transmission path that transmits a signal via a predetermined pin in a connector and a second transmission path that transmits a signal via a pin other than the predetermined pin in the connector, the computer performing the steps of:

acquiring one of types of crosstalk categorized by a positional relationship between the first transmission path and the second transmission path and a crosstalk ratio representing a ratio of a level of crosstalk provided from the second transmission path to the first transmission path for each of the pins of the second transmission path to a level of total crosstalk (S111);

computing an occupation ratio of the crosstalk for each of the types with respect to all of the crosstalk supplied to the first transmission path in the connector on the basis of the acquired types of crosstalk and crosstalk ratios (S112);

computing a noise source output representing an output of a noise source in the second transmission path on the basis of the computed occupation ratio for each of the types of crosstalk (S113);

computing first transmission path loss representing loss of the first transmission path and second transmission path loss representing loss of the second transmission path on the basis of the computed occupation ratio for each of the types of crosstalk (S114); and

computing an amount of received noise representing an amount of noise received at a receiving end of the first transmission path on the basis of the computed noise source output, the computed first transmission path loss, and the computed second transmission path loss (S115).

**Patentansprüche**

1. Evaluierungsvorrichtung zum Evaluieren eines Signalübertragungssystems, welches Signalübertragungssystem einen ersten Übertragungsweg enthält, der ein Signal über einen vorbestimmten Pin in eine Verbinder überträgt, und einen zweiten übertragungsweg, der ein Signal über einen Pin überträgt, der ein anderer als der vorbestimme Pin in dem Verbinder ist, umfassend:

eine Parametererfassungseinheit (21, 22, 26), die konfiguriert ist, um einen der Typen des Nebensprechens zu erfassen, das durch eine positionelle Beziehung zwischen dem ersten Übertragungsweg und dem zweiten Übertragungsweg kategorisiert wird, und ein Nebensprechverhältnis, das ein Verhältnis eines Pegels des Nebensprechens, das von dem zweiten Übertragungsweg für den ersten Übertragungsweg vorgesehen wird, bei jedem der Pins des zweiten Übertragungsweges zu einem Pegel des gesamten Nebensprechens darstellt;

eine Besetzungsverhältnisberechnungseinheit (25), die konfiguriert ist, um ein Besetzungsverhältnis des Nebensprechens für jeden der Typen bezüglich des ganzen Nebensprechens, das dem ersten Übertragungsweg zugeführt wird, in dem Verbinder auf der Basis der Typen des Nebensprechens und der Nebensprechverhältnisse zu berechnen, die durch die Parametererfassungseinheit (21, 22, 26) erfasst wurden;

eine Rauschquellenausgabe-Berechnungseinheit (25), die konfiguriert ist, um eine Rauschquellenausgabe, die eine Ausgabe einer Rauschquelle in dem zweiten Übertragungsweg darstellt, auf der Basis des Besetzungsverhältnisses für jeden der Typen des Nebensprechens zu berechnen, das durch die Besetzungsverhältnisberechnungseinheit (25) berechnet wurde;

eine Verlustberechnungseinheit (25), die konfiguriert ist, um den ersten Übertragungswegverlust, der einen Verlust des ersten Übertragungsweges darstellt, und den zweiten Übertragungswegverlust, der einen Verlust des zweiten Übertragungsweges darstellt, auf der Basis des Besetzungsverhältnisses für jeden der Typen des Nebensprechens zu berechnen, das durch die Besetzungsverhältnisberechnungseinheit (25) berechnet wurde; und

eine Empfangsrauschberechnungseinheit (24, 25), die konfiguriert ist, um einen Betrag des Empfangsrauschens zu berechnen, der einen Betrag des Rauschens darstellt, das auf einer Empfangsseite des ersten Übertragungsweges empfangen wird, auf der Basis der Rauschquellenansgabe, die durch die Rauschquellenausgabe-Berechrungseinheit (25) berechnet wurde, und des ersten Übertragungswegverlustes und des zweiten Übertragungswegverlustes, die durch die Verlustberechnungseinheit (25) berechnet wurden.

2. Evaluierungsvorrichtung nach Anspruch 1, bei der die Rauschquellenausgabe-Berechnungseinheit (25) betriebsfähig ist, um die Rauschquellenausgabe durch Wichten einer Ausgabe der Rauschquelle jedes Typs des Nebensprechens unter Verwendung eines Besetzungsverhältnisses des Typs des Nebensprechens und durch Mitteln der gewichteten Ausgaben zu erhalten.

3. Evaluierungsvorrichtung nach Anspruch 1 oder 2, bei der die verlustberechnungseinheit (25) betriebsfähig ist, um den ersten Übertragungswegverlust durch Wichten des Verlustes des ersten Übertragungsweges für jeden Typ des Nebensprechens unter Verwendung eines Besetzungsverhältnisses des Typs des Nebensprechens und durch Mitteln des gewichteten Verlustes aller Typen des Nebensprechens zu berechnen, und bei der die verlustberechnungseinheit (25) betriebsfähig ist, um den zweiten Übertragungswegverlust durch Wichten des Verlustes des zweiten Übertragungsweges für jeden Typ des Nebensprechens unter Verwendung des Besetzungsverhältnisses des Typs des Nebensprechens und durch Mitteln des gewichteten Verlustes aller Typen des Nebensprechens zu berechnen.

4. Evaluierungsvorrichtung nach Anspruch 1, 2 oder 3, bei der die Empfangsrauschberechnungseinheit (24, 25) betriebsfähig ist, um den Betrag des Empfangsrauschens durch Ausführen einer Wellenformsimulation zu berechnen, auf der Basis der Rauschquellenausgabe, die durch die Rauschquellenausgabe-Berechnungseinheit (25) berechnet wurde, und des ersten Übertragungswegverlustes und zweiten Übertragungswegverlustes, die durch die Verlustberechnungseinheit (25) berechnet wurden.

5. Evaluierungsvorrichtung nach Anspruch 4, bei der die Empfangsrauschberechnungseinheit (24, 25) betriebsfähig ist, um ein Drahtkopplungsverbindermodell für ein Verbindermodell einzusetzen, das bei der Wellenformsimulation verwendet wird, und bei der, auf der Basis eines Beziehungsausdrucks zwischen einem Drahtabstand des Verbindermodells und dem Nebensprechverhältnis, die Empfangsrauschberechnungseinheit (24, 25) betriebsfähig ist, um den Drahtabstand unter Verwendung des Nebensprechverhältnisses zu berechnen und den berechneten Drahtabstand in dem Verbindermodell einzustellen.

6. Evaluierungsvorrichtung nach Anspruch 4 oder 5, bei der die Empfangsrauschberechnungseinheit (24, 25) betriebsfähig ist, um eine Frequenzcharakteristik zu erfassen, die als Referenz des Verbindermodells bei der Wellenformsimulation dient, und bei der die Empfangsrauschberechnungseinheit (24, 25) betriebsfähig ist, um die Frequenzcharakteristik mit einem vorbestimmten Koeffizienten zu multiplizieren und den resultierenden wert in dem Modell als Frequenzcharakteristik des Modells einzustellen.

7. Systemevaluierungsvorrichtung nach Anspruch 1, 2 oder 3, bei der die Empfangsrauschberechnungseinheit (24, 25) eine Datenbank (26) enthält, die eine Vielzahl von verschiedenen Simulationsbedingungen und Empfangsrauschzustände speichert, die durch Wellenformsimulation berechnet wurden, die für jede der Simulationsbedingungen ausgeführt wurde, und bei der die Empfangsrauschberechnungseinheit (24, 25) betriebsfähig ist, um den Betrag des Empfangsrauschens unter Verwendung der Datenbank (26) zu berechnen.

8. Evaluierurugsvorrichtung nach Anspruch 7, bei der die Empfangsrauschberechnungseinheit (24, 25) betriebsfähig ist, um einen Beziehungsausdruck hinsichtlich der Vielzahl von Simulationsbedingungen in der Datenbank (26) zu erhalten und den Betrag des Empfangsrauschens auf der Basis der Bedingungen des Signalübertragungssystems und des Beziehungsausdrucks zu berechnen.

9. Evaluierungsvorrichtung nach einem vorhergehenden Anspruch, bei der die Parametererfassungseinheit (21, 22, 26) betriebsfähig ist, um ferner einen Rauschquellenausgabekoeffizienten zu erfassen, der einen Koeffizienten darstellt, der mit der Rauschquellenausgabe zu multiplizieren isr, und bei der die Rauschquellenausgabe-Berechnungseinheit (25) betriebsfähig ist, um die Rauschquellenausgabe mit dem Rauschquellenausgabekoeffizienten zu multiplizieren.

10. Aufzeichnungsmedium, das ein Evaluierungsprogramm für ein Signalübertragungssystem speichert, welches Signalübertragungssystem-Evaluierungsprogramm bewirkt, dass ein Computer ein Signalübertragungssystem evaluiert, welches Signalübertragungssystem einen ersten übertragungsweg enthält, der ein Signal über einen vorbestimmten Pin in einem Verbinder überträgt, und einen zweiten Übertragungsweg, der ein Signal über einen Pin überträgt, der ein anderer als der vorbestimmte Pin in dem Verbinder ist, welches Programm bewirkt, dass der Computer die Schritte ausführt:

Erfassen eines der Typen des Nebensprechens, das durch eine positionelle Beziehung zwischen dem ersten Übertragungsweg und dem zweiten Übertragungsweg kategorisiert wird, und eines Nebensprechverhältnisses, das ein Verhältnis eines Pegels des Nebensprechens, das von dem zweiten Übertragungsweg für den ersten Übertragungsweg vorgesehen wird, bei jedem der Pins des zweiten Übertragungsweges zu einem Pegel des gesamten Nebensprechens darstellt (S111);
Berechnen eines Besetzungsverhältnisses des Nebensprechcns für jeden der Typen bezüglich des ganzen Nebensprechens, das dem ersten Übertragungsweg zugeführt wird, in dem Verbinder auf der Basis der erfassten Typen des Nebensprechens und Nebensprechverhältnisse (S112);
Berechnen einer Rauschquellenausgabe, die eine Ausgabe einer Rauschquelle in dem zweiten Übertragungsweg darstellt, auf der Basis des berechneten Besetzungsverhältnisses für jeden der Typen des Nebensprechens (S113);
Berechnen des ersten Übertragungswegverlustes, der einen Verlust des ersten Übertragungsweges darstellt, und des zweiten Übertragungswegverlustes, der einen Verlust des zweiten Übertragungsweges darstellt, auf der Basis des berechneten Besetzungsverhältnisses für jeden der Typen des Nebensprechens (S114); und
Berechnen eines Betrages des Empfangsrauschens, der einen Betrag des Rauschens darstellt, das auf einer Empfangsseite des ersten Übertragungsweges empfangen wird, auf der Basis der berechneten Rauschquellenausgabe, des berechneten ersten Übertragungswegverlustes und des berechneten zweiten Übertragungswegverlustes (S115).

11. Aufzeichnungsmedium nach Anspruch 10, bei dem das Programm ferner bewirkt, dass der Computer den Schritt ausführt zum Erhalten der Rauschquellenausgabe durch Wichten einer Ausgabe der Rauschquelle jedes Typs des Nebensprechens unter Verwendung eines Besetzungsverhältnisses des Typs des Nebensprechens und durch Mitteln der gewichteten Ausgaben.

12. Aufzeichnungsmedium nach Anspruch 10 oder 11, bei dem das Programm ferner bewirkt, dass der Computer den Schritt ausführt zum Berechnen des ersten Übertragungswegverlustes durch Wichten des Verlustes des ersten Übertragungsweges für jeden Typ des Nebensprechens unter Verwendung eines Besetzungsverhältnisses des Typs des Nebensprechens und durch Mitteln des gewichteten Verlustes aller Typen des Nebensprechens, sowie den Schritt zum Berechnen des zweiten Übertragungswegverlustes durch Wichten des Verlustes des zweiten Übertragungsweges für jeden Typ des Nebensprechens unter Verwendung des Besetzungsverhältnisses des Typs des Nebensprechens und durch Mitteln des gewichteten Verlustes aller Typen des Nebensprechens.

13. Aufzeichnungsmedium nach Anspruch 10, 11 oder 12, bei dem das Programm ferner bewirkt, dass der Computer den Schritt ausführt zum Berechnen des Betrages des Empfangsrauschens durch Ausführen einer Wellenformsimulation auf der Basis der berechneten Rauschquellenausgabe, des berechneten ersten Übertragungswegverlustes und des berechneten zweiten Übertragungswegverlustes.

14. Aufzeichnungsmedium nach Anspruch 10, 11, 12 oder 13, bei dem das Programm ferner bewirkt, dass der Computer die Schritte ausführt zum Einsetzen eines Drahtkopplungsverbindermodells für das Verbindermodell, das bei der Wellenformsimulation verwendet wird, und zum Berechnen, auf der Basis eines Beziehungsausdrucks zwischen einem Drahtabstand des Verbindermodells und dem Nebensprechverhältnis, des Drahtabstandes von dem Nebensprechverhältnis und zum Einstellen des berechneten Drahtabstandes in dem Verbindermodell.

15. Aufzeichnungsmedium nach Anspruch 13, bei dem das Programm ferner bewirkt, dass der Computer die Schritte ausführt zum Erfassen einer Frequenzcharakteristik, die als Referenz des Verbindermodells bei der Wellenformsimulation dient, zum Multiplizieren der Frequenzcharakteristik mit einem vorbestimmten Koeffizienten und zum Einstellen des resultierenden Wertes in dem Modell als Frequenzcharakteristik des Modells.

**16.** Aufzeichnungsmedium nach Anspruch 10, 11 oder 12, oder nach Anspruch 14, in Verbindung mit Anspruch 10, 11 oder 12, bei dem das Programm ferner bewirkt, dass der Computer die Schritte ausführt zum Vorsehen einer Datenbank (26), die eine Vielzahl von verschiedenen Simulationsbedingungen und Empfangsrauschzustände speichert, die durch Wellenformsimulation berechnet wurden, die für jede der Simulationsbedingungen ausgeführt wurde, und zum Berechnen des Betrages des Empfangsrauschens unter Verwendung der Datenbank (26).

**17.** Verfahren zum Evaluieren eines Signalübertragungssystems zur Verwendung in einem Computer, welches Signalübertragungssystem einen ersten Übertragungsweg enthält, der ein Signal über einen vorbestimmten Pin in einem Verbinder überträgt, und einen zweiten Übertragungsweg, der ein Signal über einen Pin überträgt, der ein anderer als der vorbestimmte Pin in dem Verbinder ist, welcher Computer die Schritte ausführt:

Erfassen eines der Typen des Nebensprechens, das durch eine positionelle Beziehung zwischen dem ersten Übertragungsweg und dem zweiten Übertragungsweg kategorisiert wird, und eines Nebensprechverhältnisses, das ein Verhältnis eines Pegels des Nebensprechens, das von dem zweiten Übertragungsweg für den ersten Übertragungsweg vorgesehen wird, bei jedem der Pins des zweiten Übertragungsweges zu einem Pegel des gesamten Nabensprechens darstellt (S111);

Berechnen eines Besetzungsverhältnisses des Nebensprechens für jeden der Typen bezüglich des ganzen Nebensprechens, das dem ersten Übertragungsweg zugeführt wird, in dem Verbinder auf der Basis der erfassten Typen des Nebensprechens und Nebensprechverhältnisse (S112);

Berechnen einer Rauschquellenausgabe, die eine Ausgabe einer Rauschquelle in dem zweiten Übertragungsweg darstellt, auf der Basis des berechneten Besetzungsverhältnisses für jeden der Typen des Nebensprechens (S113);

Berechnen des ersten Übertragungswegverlustes, der einen Verlust des ersten Übertragungsweges darstellt, und des zweiten Übertragungswegverlustes, der einen Verlust des zweiten Übertragungsweges darstellt, auf der Basis des berechneten Besetzungsverhältnisses für jeden der Typen des Nebensprechens (S114); und

Berechnen eines Betrages des Empfangsrauschens, der einen Betrag des Rauschens darstellt, das auf einer Empfangsseite des ersten Übertragungsweges empfangen wird, auf der Basis der berechneten Rauschquellenausgabe, des berechneten ersten Übertragungswegverlustes und des berechneten zweiten Übertragungswegverlustes (S115).

## Revendications

**1.** Appareil d'évaluation pour évaluer un système de transmission de signal, le système de transmission de signal comprenant un premier trajet de transmission qui transmet un signal par l'intermédiaire d'une broche prédéterminée dans un connecteur et un deuxième trajet de transmission qui transmet un signal par l'intermédiaire d'une broche autre que la broche prédéterminée dans le connecteur, comprenant :

une unité d'acquisition de paramètre (21, 22, 26) configurée pour acquérir l'un de types de diaphonie classés par relation de position entre le premier trajet de transmission et le deuxième trajet de transmission et un rapport de diaphonie représentant un rapport entre un niveau de diaphonie appliqué du deuxième trajet de transmission au premier trajet de transmission pour chacune des broches du deuxième trajet de transmission et un niveau de diaphonie totale ;

une unité de calcul de rapport d'occupation (25) configurée pour calculer un rapport d'occupation de la diaphonie pour chacun des types par rapport à toute la diaphonie appliquée au premier trajet de transmission dans le connecteur sur la base des types de diaphonie et des rapports de diaphonie acquis par l'unité d'acquisition de paramètre (21, 22, 26) ;

une unité de calcul de sortie de source de bruit (25) configurée pour calculer une sortie de source de bruit représentant une sortie d'une source de bruit dans le deuxième trajet de transmission sur la base du rapport d'occupation pour chacun des types de diaphonie calculé par l'unité de calcul de rapport d'occupation (25) ;

une unité de calcul de perte (25) configurée pour calculer une première perte de trajet de transmission représentant une perte du premier trajet de transmission et une deuxième perte de trajet de transmission représentant une perte du deuxième trajet de transmission sur la base du rapport d'occupation pour chacun des types de diaphonie calculé par l'unité de calcul de rapport d'occupation (25) ; et

une unité de calcul de bruit reçu (24, 25) configurée pour calculer une quantité de bruit reçu représentant une quantité de bruit reçu à une extrémité de réception du premier trajet de transmission sur la base de la sortie de source de bruit calculée par l'unité de calcul de sortie de source de bruit (25) et de la première perte de trajet de transmission et de la deuxième perte de trajet de transmission calculées par l'unité de calcul de perte (25).

2. Appareil d'évaluation selon la revendication 1, dans lequel l'unité de calcul de sortie de source de bruit (25) peut être utilisée pour obtenir la sortie de source de bruit en pondérant une sortie de la source de bruit de chaque type de diaphonie en utilisant un rapport d'occupation du type de diaphonie et en moyennant les sorties pondérées.

3. Appareil d'évaluation selon la revendication 1 ou 2, dans lequel l'unité de calcul de perte (25) peut être utilisée pour calculer la première perte de trajet de transmission en pondérant la perte du premier trajet de transmission pour chaque type de diaphonie en utilisant un rapport d'occupation du type de diaphonie et en moyennant la perte pondérée de tous les types de diaphonie, et dans lequel l'unité de calcul de perte (25) peut être utilisée pour calculer la deuxième perte de trajet de transmission en pondérant la perte du deuxième trajet de transmission pour chaque type de diaphonie en utilisant le rapport d'occupation du type de diaphonie et en moyennant la perte pondérée de tous les types de diaphonie.

4. Appareil d'évaluation selon la revendication 1, 2 ou 3, dans lequel l'unité de calcul de bruit reçu (24, 25) peut être utilisée pour calculer la quantité de bruit reçu en effectuant une simulation de forme d'onde sur la base de la sortie de source de bruit calculée par l'unité de calcul de sortie de source de bruit (25) et de la première perte de trajet de transmission et de la deuxième perte de trajet de transmission calculées par l'unité de calcul de perte (25).

5. Appareil d'évaluation selon la revendication 4, dans lequel l'unité de calcul de bruit reçu (24, 25) peut être utilisée pour employer un modèle de connecteur d'accouplement de fils pour un modèle de connecteur utilisé dans la simulation de forme d'onde, et dans lequel, sur la base d'une expression relationnelle entre un espacement des fils du modèle de connecteur et le rapport de diaphonie, l'unité de calcul de bruit reçu (24, 25) peut être utilisée pour calculer l'espacement des fils en utilisant le rapport de diaphonie et définir l'espacement des fils calculé dans le modèle de connecteur.

6. Appareil d'évaluation selon la revendication 4 ou 5, dans lequel l'unité de calcul de bruit reçu (24, 25) peut être utilisée pour acquérir une caractéristique fréquentielle servant en tant que référence du modèle de connecteur dans la simulation de forme d'onde, et dans lequel l'unité de calcul de bruit reçu (24, 25) peut être utilisée pour multiplier la caractéristique fréquentielle par un coefficient prédéterminé et fixer la valeur résultante dans le modèle en tant que caractéristique fréquentielle du modèle.

7. Appareil d'évaluation de système selon la revendication 1, 2 ou 3, dans lequel l'unité de calcul de bruit reçu (24, 25) comprend une base de données (26) qui mémorise une pluralité de conditions de simulation différentes et d'états de bruit reçu différents calculés par une simulation de forme d'onde effectuée pour chacune des conditions de simulation, et dans lequel l'unité de calcul de bruit reçu (24, 25) peut être utilisée pour calculer la quantité de bruit reçu en utilisant la base de données (26).

8. Appareil d'évaluation selon la revendication 7, dans lequel l'unité de calcul de bruit reçu (24, 25) peut être utilisée pour obtenir une expression relationnelle concernant la pluralité de conditions de simulation dans la base de données (26) et calculer la quantité de bruit reçu sur la base des conditions du système de transmission de signal et de l'expression relationnelle.

9. Appareil d'évaluation selon l'une quelconque des revendications précédentes, dans lequel l'unité d'acquisition de paramètre (21, 22, 26) peut être utilisée pour acquérir en outre un coefficient de sortie de source de bruit représentant un coefficient à multiplier par la sortie de source de bruit, et dans lequel l'unité de calcul de sortie de source de bruit (25) peut être utilisée pour multiplier la sortie de source de bruit par le coefficient de sortie de source de bruit.

10. Support d'enregistrement mémorisant un programme d'évaluation pour un système de transmission de signal, le programme d'évaluation de système de transmission de signal amenant un ordinateur à évaluer un système de transmission de signal, le système de transmission de signal comprenant un premier trajet de transmission qui transmet un signal par l'intermédiaire d'une broche prédéterminée dans un connecteur et un deuxième trajet de transmission qui transmet un signal par l'intermédiaire d'une broche autre que la broche prédéterminée dans le connecteur, le programme amenant l'ordinateur à effectuer les étapes consistant à :

acquérir l'un de types de diaphonie classés par relation de position entre le premier trajet de transmission et le deuxième trajet de transmission et un rapport de diaphonie représentant un rapport entre un niveau de diaphonie appliqué du deuxième trajet de transmission au premier trajet de transmission pour chacune des broches du deuxième trajet de transmission et un niveau de diaphonie totale (S111) ;

calculer un rapport d'occupation de la diaphonie pour chacun des types par rapport à toute la diaphonie appliquée au premier trajet de transmission dans le connecteur sur la base des types de diaphonie et des rapports de diaphonie acquis (S112) ;

calculer une sortie de source de bruit représentant une sortie d'une source de bruit dans le deuxième trajet de transmission sur la base du rapport d'occupation calculé pour chacun des types de diaphonie (S113) ;

calculer une première perte de trajet de transmission représentant la perte du premier trajet de transmission et une deuxième perte de trajet de transmission représentant la perte du deuxième trajet de transmission sur la base du rapport d'occupation calculé pour chacun des types de diaphonie (S114) ; et

calculer une quantité de bruit reçu représentant une quantité de bruit reçu à une extrémité de réception du premier trajet de transmission sur la base de la sortie de source de bruit calculée, de la première perte de trajet de transmission calculée, et de la deuxième perte de trajet de transmission calculée (S1115).

11. Support d'enregistrement selon la revendication 10, dans lequel le programme amène en outre l'ordinateur à effectuer l'étape d'obtention de la sortie de source de bruit en pondérant une sortie de la source de bruit de chaque type de diaphonie en utilisant un rapport d'occupation du type de diaphonie et en moyennant les sorties pondérées.

12. Support d'enregistrement selon la revendication 10 ou 11, dans lequel le programme amène en outre l'ordinateur à effectuer l'étape de calcul de la première perte de trajet de transmission en pondérant la perte du premier trajet de transmission pour chaque type de diaphonie en utilisant un rapport d'occupation du type de diaphonie et en moyennant la perte pondérée de tous les types de diaphonie, et l'étape de calcul de la deuxième perte de trajet de transmission en pondérant la perte du deuxième trajet de transmission pour chaque type de diaphonie en utilisant le rapport d'occupation du type de diaphonie et en moyennant la perte pondérée de tous les types de diaphonie.

13. Support d'enregistrement selon la revendication 10, 11 ou 12, dans lequel le programme amène en outre l'ordinateur à effectuer l'étape de calcul de la quantité de bruit reçu en effectuant une simulation de forme d'onde sur la base de la sortie de source de bruit calculée, de la première perte de trajet de transmission calculée, et de la deuxième perte de trajet de transmission calculée.

14. Support d'enregistrement selon la revendication 10, 11, 12 ou 13, dans lequel le programme amène en outre l'ordinateur à effectuer les étapes consistant à employer un modèle de connecteur d'accouplement de fils pour le modèle de connecteur utilisé dans la simulation de forme d'onde et calculer, sur la base d'une expression relationnelle entre un espacement des fils du modèle de connecteur et le rapport de diaphonie, l'espacement des fils à partir du rapport de diaphonie, et définir l'espacement des fils calculé dans le modèle de connecteur.

15. Support d'enregistrement selon la revendication 13, dans lequel le programme amène en outre l'ordinateur à effectuer les étapes consistant à acquérir une caractéristique fréquentielle servant en tant que référence du modèle de connecteur dans la simulation de forme d'onde, multiplier la caractéristique fréquentielle par un coefficient prédéterminé, et fixer la valeur résultante dans le modèle en tant que caractéristique fréquentielle du modèle.

16. Support d'enregistrement selon la revendication 10, 11 ou 12, ou la revendication 14 lorsqu'elle est lue conjointement avec la revendication 10, 11 ou 12, dans lequel le programme amène en outre l'ordinateur à effectuer les étapes consistant à inclure une base de données (26) qui mémorise une pluralité de conditions de simulation différentes et d'états de bruit reçu différents calculés par une simulation de forme d'onde effectuée pour chacune des conditions de simulation et calculer la quantité de bruit reçu en utilisant la base de données (26).

17. Procédé d'évaluation d'un système de transmission de signal pour une utilisation dans un ordinateur, le système de transmission de signal comprenant un premier trajet de transmission qui transmet un signal par l'intermédiaire d'une broche prédéterminée dans un connecteur et un deuxième trajet de transmission qui transmet un signal par l'intermédiaire d'une broche autre que la broche prédéterminée dans le connecteur, l'ordinateur effectuant les étapes consistant à :

acquérir l'un de types de diaphonie classés par relation de position entre le premier trajet de transmission et le deuxième trajet de transmission et un rapport de diaphonie représentant un rapport entre un niveau de diaphonie appliqué du deuxième trajet de transmission au premier trajet de transmission pour chacune des broches du deuxième trajet de transmission et un niveau de diaphonie totale (S111) ;

calculer un rapport d'occupation de la diaphonie pour chacun des types par rapport à toute la diaphonie appliquée au premier trajet de transmission dans le connecteur sur la base des types acquis de diaphonie et des rapports de diaphonie (S112) ;

calculer une sortie de source de bruit représentant une sortie d'une source de bruit dans le deuxième trajet de transmission sur la base du rapport d'occupation calculé pour chacun des types de diaphonie (S113) ;

calculer une première perte de trajet de transmission représentant la perte du premier trajet de transmission et une deuxième perte de trajet de transmission

représentant la perte du deuxième trajet de transmission sur la base du rapport d'occupation calculé pour chacun des types de diaphonie (S114) ; et

calculer une quantité de bruit reçu représentant une quantité de bruit reçu à une extrémité de réception du premier trajet de transmission sur la base de la sortie de source de bruit calculée, de la première perte de trajet de transmission calculée, et de la deuxième perte de trajet de transmission calculée (S115).

EP 2 159 928 B1

FIG. 1

WAVEFORM SIMULATOR    24

COMPUTING UNIT    25

DATABASE    26

SETTING UNIT    22

UI UNIT    21

# FIG. 2

# FIG. 3

EP 2 159 928 B1

# FIG. 4

```
                    ┌─────────────┐
                    │    START    │
                    └──────┬──────┘
                           │
                           ▼
   ┌───────────────────────────────────────────────┐ ┐
   │    CONNECTOR CONDITION ACQUIRING PROCESS       │ ├─S111
   └───────────────────────┬───────────────────────┘ ┘
                           │
                           ▼
   ┌───────────────────────────────────────────────┐ ┐
   │      OCCUPATION RATIO COMPUTING PROCESS        │ ├─S112
   └───────────────────────┬───────────────────────┘ ┘
                           │
                           ▼
   ┌───────────────────────────────────────────────┐ ┐
   │ AVERAGE NOISE SOURCE AMPLITUDE COMPUTING PROCESS│ ├─S113
   └───────────────────────┬───────────────────────┘ ┘
                           │
                           ▼
   ┌───────────────────────────────────────────────┐ ┐
   │ AVERAGE TRANSMISSION PATH LOSS COMPUTING PROCESS│ ├─S114
   └───────────────────────┬───────────────────────┘ ┘
                           │
                           ▼
   ┌───────────────────────────────────────────────┐ ┐
   │ RECEIVING END NOISE AMPLITUDE COMPUTING PROCESS │ ├─S115
   └───────────────────────┬───────────────────────┘ ┘
                           │
                           ▼
                    ┌─────────────┐
                    │     END     │
                    └─────────────┘
```

# FIG. 5

INPUT CONDITIONS

TRANSMITTING SIDE
CONNECTOR PIN
ARRANGEMENT
INFORMATION

| T-SS | T-SS |
|------|------|
| T-SD | TARGET NET |
| T-DD | T-SS |
| T-DS | T-SS |

RECEIVING SIDE
CONNECTOR PIN
ARRANGEMENT
INFORMATION

| R-SS | R-SS |
|------|------|
| R-SD | TARGET NET |
| R-DD | R-SS |
| R-DS | R-SS |

NOISE
SOURCE
AMPLITUDE

☐ mV

☐ mm

☐ mm

☐ mm

☐ mm

DEPENDENCY OF
CROSSTALK RATIO ON
PIN ARRANGEMENT

| 1% | 2% |
|----|----|
| 2% | TARGET NET |
| 1% | 2% |
| 0% | 1% |

# FIG. 6

```
         ┌─────────────┐
         │    START    │
         └──────┬──────┘
                ▼
┌──────────────────────────────────────────┐   S121
│  CLASSIFY CROSSTALK INTO CROSSTALK TYPES  │
└──────────────────┬───────────────────────┘
                   ▼
┌──────────────────────────────────────────┐   S123
│    COMPUTE CROSSTALK RATIO OF EACH TYPE   │
└──────────────────┬───────────────────────┘
                   ▼
┌──────────────────────────────────────────┐   S124
│ ASSOCIATE CROSSTALK TYPE WITH CROSSTALK RATIO │
└──────────────────┬───────────────────────┘
                   ▼
┌──────────────────────────────────────────┐   S125
│  COMPUTE SUM OF CROSSTALK RATIOS OF ALL TYPES │
└──────────────────┬───────────────────────┘
                   ▼
┌──────────────────────────────────────────┐   S126
│   COMPUTE OCCUPATION RATIO OF EACH TYPE   │
└──────────────────┬───────────────────────┘
                   ▼
            ┌─────────────┐
            │     END     │
            └─────────────┘
```

## FIG. 7

| CONNECTOR | COUPLING | CONNECTION | ABBREVIATED TYPE NAME |
|---|---|---|---|
| TRANSMITTING SIDE | SAME DIRECTION | SAME PIU | T-SS |
| TRANSMITTING SIDE | SAME DIRECTION | DIFFERENT PIU | T-SD |
| TRANSMITTING SIDE | OPPOSITE DIRECTION | SAME PIU | T-DS |
| TRANSMITTING SIDE | OPPOSITE DIRECTION | DIFFERENT PIU | T-DD |
| RECEIVING SIDE | SAME DIRECTION | SAME PIU | R-SS |
| RECEIVING SIDE | SAME DIRECTION | DIFFERENT PIU | R-SD |
| RECEIVING SIDE | OPPOSITE DIRECTION | SAME PIU | R-DS |
| RECEIVING SIDE | OPPOSITE DIRECTION | DIFFERENT PIU | R-DD |

EP 2 159 928 B1

FIG. 8

# FIG. 9

T-SD

TRANSMITTING SIDE

TARGET NET

NOISE SOURCE

R-SD

TARGET NET

RECEIVING SIDE

NOISE SOURCE

EP 2 159 928 B1

FIG. 10

# FIG. 11

T-DD

R-DD

# FIG. 12

|   | A | B |
|---|---|---|
| 1 | a(%) | c (%) |
| 2 | TARGET PIN | d (%) |
| 3 | b(%) | e (%) |

# FIG. 13

|   | A | B |
|---|---|---|
| 1 | T-SS→a(%) | T-SD→c(%) |
| 2 | TARGET PIN | T-DS→d(%) |
| 3 | T-SS→b(%) | T-DD→e(%) |

# FIG. 14

|   | A | B |
|---|---|---|
| 1 | R-SD→a(%) | R-SS→c(%) |
| 2 | TARGET PIN | R-DS→d(%) |
| 3 | R-SD→b(%) | R-DD→e(%) |

## FIG. 15

| TYPE | CONNECTOR | COUPLING | CONNECTION | TOTAL SUM OF CROSSTALK RATIOS |
|---|---|---|---|---|
| T-SS | TRANSMITTING SIDE | SAME DIRECTION | SAME PIU | (a + b)(%) |
| T-SD | TRANSMITTING SIDE | SAME DIRECTION | DIFFERENT PIU | c(%) |
| T-DS | TRANSMITTING SIDE | OPPOSITE DIRECTION | SAME PIU | e(%) |
| T-DD | TRANSMITTING SIDE | OPPOSITE DIRECTION | DIFFERENT PIU | d(%) |
| R-SS | RECEIVING SIDE | SAME DIRECTION | SAME PIU | c(%) |
| R-SD | RECEIVING SIDE | SAME DIRECTION | DIFFERENT PIU | (a + b)(%) |
| R-DS | RECEIVING SIDE | OPPOSITE DIRECTION | SAME PIU | d(%) |
| R-DD | RECEIVING SIDE | OPPOSITE DIRECTION | DIFFERENT PIU | e(%) |

TOTAL 100%

EP 2 159 928 B1

## FIG. 16

| TYPE | CONNECTOR | COUPLING | CONNECTION | OCCUPATION RATIO |
|---|---|---|---|---|
| T-SS | TRANSMITTING SIDE | SAME DIRECTION | SAME PIU | $(a + b)/t \times 100(\%)$ |
| T-SD | TRANSMITTING SIDE | SAME DIRECTION | DIFFERENT PIU | $c/t \times 100(\%)$ |
| T-DS | TRANSMITTING SIDE | OPPOSITE DIRECTION | SAME PIU | $e/t \times 100(\%)$ |
| T-DD | TRANSMITTING SIDE | OPPOSITE DIRECTION | DIFFERENT PIU | $d/t \times 100(\%)$ |
| R-SS | RECEIVING SIDE | SAME DIRECTION | SAME PIU | $c/t \times 100(\%)$ |
| R-SD | RECEIVING SIDE | SAME DIRECTION | DIFFERENT PIU | $(a + b)/t \times 100(\%)$ |
| R-DS | RECEIVING SIDE | OPPOSITE DIRECTION | SAME PIU | $d/t \times 100(\%)$ |
| R-DD | RECEIVING SIDE | OPPOSITE DIRECTION | DIFFERENT PIU | $e/t \times 100(\%)$ |

TOTAL 100%

## FIG. 17

| TYPE | CONNECTOR | COUPLING | CONNECTION | NOISE SOURCE AMPLITUDE CONDITION |
|---|---|---|---|---|
| T-SS | TRANSMITTING SIDE | SAME DIRECTION | SAME PIU | MIN VALUE |
| T-SD | TRANSMITTING SIDE | SAME DIRECTION | DIFFERENT PIU | MIN VALUE |
| T-DS | TRANSMITTING SIDE | OPPOSITE DIRECTION | SAME PIU | MAX VALUE |
| T-DD | TRANSMITTING SIDE | OPPOSITE DIRECTION | DIFFERENT PIU | MAX VALUE |
| R-SS | RECEIVING SIDE | SAME DIRECTION | SAME PIU | MIN VALUE |
| R-SD | RECEIVING SIDE | SAME DIRECTION | DIFFERENT PIU | MAX VALUE |
| R-DS | RECEIVING SIDE | OPPOSITE DIRECTION | SAME PIU | MAX VALUE |
| R-DD | RECEIVING SIDE | OPPOSITE DIRECTION | DIFFERENT PIU | MAX VALUE |

EP 2 159 928 B1

## FIG. 18

| TYPE | CONNECTOR | COUPLING | CONNECTION | SETTING OF WIRING LENGTH OF NOISE SOURCE | | SETTING OF WIRING LENGTH OF TARGET NET | |
|---|---|---|---|---|---|---|---|
| | | | | TRANSMITTING PIU | BWB | BWB | RECEIVING PIU |
| T-SS | TRANSMITTING SIDE | SAME DIRECTION | SAME PIU | MIN VALUE | UNUSED | MAX VALUE | MAX VALUE |
| T-SD | TRANSMITTING SIDE | SAME DIRECTION | DIFFERENT PIU | MIN VALUE | UNUSED | MAX VALUE | MAX VALUE |
| T-DS | TRANSMITTING SIDE | OPPOSITE DIRECTION | SAME PIU | MIN VALUE | MIN VALUE | MAX VALUE | MAX VALUE |
| T-DD | TRANSMITTING SIDE | OPPOSITE DIRECTION | DIFFERENT PIU | MIN VALUE | MIN VALUE | MAX VALUE | MAX VALUE |
| R-SS | RECEIVING SIDE | SAME DIRECTION | SAME PIU | MIN VALUE | MAX VALUE | UNUSED | MAX VALUE |
| R-SD | RECEIVING SIDE | SAME DIRECTION | DIFFERENT PIU | MIN VALUE | MAX VALUE | UNUSED | MAX VALUE |
| R-DS | RECEIVING SIDE | OPPOSITE DIRECTION | SAME PIU | MIN VALUE | UNUSED | UNUSED | MAX VALUE |
| R-DD | RECEIVING SIDE | OPPOSITE DIRECTION | DIFFERENT PIU | MIN VALUE | UNUSED | UNUSED | MAX VALUE |

EP 2 159 928 B1

## FIG. 19

| No. | CONNECTOR | COUPLING | CONNECTION | NOISE SOURCE [dB] | TARGET NET [dB] |
|---|---|---|---|---|---|
| T-SS | TRANSMITTING SIDE | SAME DIRECTION | SAME PIU | a1 | a2 |
| T-SD | TRANSMITTING SIDE | SAME DIRECTION | DIFFERENT PIU | b1 | b2 |
| T-DS | TRANSMITTING SIDE | OPPOSITE DIRECTION | SAME PIU | c1 | c2 |
| T-DD | TRANSMITTING SIDE | OPPOSITE DIRECTION | DIFFERENT PIU | d1 | d2 |
| R-SS | RECEIVING SIDE | SAME DIRECTION | SAME PIU | e1 | e2 |
| R-SD | RECEIVING SIDE | SAME DIRECTION | DIFFERENT PIU | f1 | f2 |
| R-DS | RECEIVING SIDE | OPPOSITE DIRECTION | SAME PIU | g1 | g2 |
| R-DD | RECEIVING SIDE | OPPOSITE DIRECTION | DIFFERENT PIU | h1 | h2 |

# FIG. 20

START

COMPUTE SIMULATED TRANSMISSION PATH LENGTH — S131

COMPUTE NOISE AMPLITUDE COEFFICIENT — S132

SET OUTPUT AMPLITUDE OF NOISE SOURCE MODEL — S133

COMPUTE NOISE AMPLITUDE AT RECEIVING END — S134

END

# FIG. 21

NOISE SOURCE LOSS
MODEL

↓

CONVERSION

↓

NOISE-SOURCE
TRANSMISSION PATH
WIRING LENGTH

41   42   43   46   47   44   45

TARGET-NET
TRANSMISSION PATH
WIRING LENGTH

↑

CONVERSION

↑

TARGET NET LOSS
MODEL

EP 2 159 928 B1

# FIG. 22

NOISE SOURCE
AMPLITUDE COEFFICIENT
= 5

REFERENCE
CROSSTALK RATIO
= 1%

EP 2 159 928 B1

EP 2 159 928 B1

# FIG. 23

OUTPUT AMPLITUDE
= AVERAGE NOISE
SOURCE AMPLITUDE

41

42

47

44

45

46

43

# FIG. 24

NOISE SOURCE

41 42 47 44

46 43 45

OBSERVE AMPLITUDE
OF NOISE WAVEFORM

EP 2 159 928 B1

# FIG. 25

```
        ┌─────────────┐
        │    START    │
        └─────────────┘
               │
               ▼
┌─────────────────────────────────────────┐  ┌ S141
│        GENERATE NOISE DATABASE           │
└─────────────────────────────────────────┘
               │
               ▼
┌─────────────────────────────────────────┐  ┌ S142
│   COMPUTE VARIOUS DEPENDENCY COEFFICIENTS │
└─────────────────────────────────────────┘
               │
               ▼
┌─────────────────────────────────────────┐  ┌ S143
│      COMPUTE RATIO OF CURRENT CONDITION   │
│          TO REFERENCE CONDITION           │
└─────────────────────────────────────────┘
               │
               ▼
┌─────────────────────────────────────────┐  ┌ S144
│        COMPUTE AMOUNT OF CROSSTALK        │
└─────────────────────────────────────────┘
               │
               ▼
        ┌─────────────┐
        │     END     │
        └─────────────┘
```

# FIG. 26

| VALUES OF PARAMETERS HAVING EFFECT ON NOISE | | | | | COMPUTATION RESULT OF NOISE | |
|---|---|---|---|---|---|---|
| NUMBER OF CONSECUTIVE 0s | TRANSMISSION SPEED (Gbps) | NOISE SOURCE LOSS (dB@1.6GHz) | TARGET NET LOSS (dB@1.6GHz) | trtf | NOISE (mVpp) | Xtalk RATIO (%) |
| 7 | 1.25 | 1 | 1 | 0.05 | 21.4 | 2.14 |
| 7 | 1.25 | 1 | 1 | 0.2 | 16.5 | 1.65 |
| 7 | 1.25 | 1 | 10 | 0.05 | 9.603 | 0.9603 |
| 7 | 1.25 | 1 | 10 | 0.2 | 9.048 | 0.9048 |
| 7 | 1.25 | 10 | 1 | 0.05 | 9.778 | 0.9778 |
| 7 | 1.25 | 10 | 1 | 0.2 | 9.07 | 0.907 |
| 7 | 1.25 | 10 | 10 | 0.05 | 6.375 | 0.6375 |
| 7 | 1.25 | 10 | 10 | 0.2 | 6.162 | 0.6162 |
| 7 | 2.5 | 1 | 1 | 0.05 | 20.518 | 2.0518 |
| 7 | 2.5 | 1 | 1 | 0.2 | 16.345 | 1.6345 |
| 7 | 2.5 | 1 | 10 | 0.05 | 9.92 | 0.992 |
| 7 | 2.5 | 1 | 10 | 0.2 | 9.149 | 0.9149 |
| 7 | 2.5 | 10 | 1 | 0.05 | 9.748 | 0.9748 |
| 7 | 2.5 | 10 | 1 | 0.2 | 9.109 | 0.9109 |
| 7 | 2.5 | 10 | 10 | 0.05 | 5.938 | 0.5938 |
| 7 | 2.5 | 10 | 10 | 0.2 | 5.586 | 0.5586 |
| 72 | 1.25 | 1 | 1 | 0.05 | 21.128 | 2.1128 |
| 72 | 1.25 | 1 | 1 | 0.2 | 16.603 | 1.6603 |
| 72 | 1.25 | 1 | 10 | 0.05 | 10.146 | 1.0146 |
| 72 | 1.25 | 1 | 10 | 0.2 | 9.167 | 0.9167 |
| 72 | 1.25 | 10 | 1 | 0.05 | 10.164 | 1.0164 |
| 72 | 1.25 | 10 | 1 | 0.2 | 9.148 | 0.9148 |
| 72 | 1.25 | 10 | 10 | 0.05 | 6.331 | 0.6331 |
| 72 | 1.25 | 10 | 10 | 0.2 | 6.408 | 0.6408 |
| 72 | 2.5 | 1 | 1 | 0.05 | 21.136 | 2.1136 |
| 72 | 2.5 | 1 | 1 | 0.2 | 16.277 | 1.6277 |
| 72 | 2.5 | 1 | 10 | 0.05 | 10.028 | 1.0028 |
| 72 | 2.5 | 1 | 10 | 0.2 | 9.393 | 0.9393 |
| 72 | 2.5 | 10 | 1 | 0.05 | 9.931 | 0.9931 |

# FIG. 27

NUMBER OF CONSECUTIVE BITS OF "0"

NOISE SOURCE LOSS

47

44

TRANSMISSION SPEED

41

42

trtf

46

43

45

TARGET NET LOSS

NOISE DATABASE

EP 2 159 928 B1

# FIG. 28

VALUES OF PARAMETERS HAVING EFFECT ON NOISE      COMPUTATION RESULT OF NOISE

| NUMBER OF CONSECUTIVE 0s | TRANSMISSION SPEED (Gbps) | NOISE SOURCE LOSS (dB@1.6GHz) | TARGET NET LOSS (dB@1.6GHz) | trtf | NOISE (mVpp) | Xtalk RATIO (%) |
|---|---|---|---|---|---|---|
| 7 | 1.25 | TRANSMISSION SPEED A | 1 | 0.05 | 21.4 | 2.14 |
| 7 | 1.25 | 1 | 1 | 0.2 | 16.5 | 1.65 |
| 7 | 1.25 | 1 | 10 | 0.05 | 9.603 | 0.9603 |
| 7 | 1.25 | 1 | 10 | 0. | AMOUNT OF CHANGE | 0.9048 |
| 7 | 1.25 | 10 | 1 | 0. | | 0.9778 |
| 7 | 1.25 | 10 | 1 | 0.2 | 9.07 | 0.907 |
| 7 | 1.25 | 10 | 10 | 0.05 | 6.375 | 0.6375 |
| 7 | 1.25 | 10 | 10 | 0.2 | 6.162 | 0.6162 |
| 7 | 2.5 | TRANSMISSION SPEED B | 1 | 0.05 | 20.518 | 2.0518 |
| 7 | 2.5 | 1 | 1 | 0.2 | 16.345 | 1.6345 |
| 7 | 2.5 | 1 | 10 | 0.05 | 9.92 | 0.992 |
| 7 | 2.5 | 1 | 10 | 0.2 | 9.149 | 0.9149 |
| 7 | 2.5 | 10 | 1 | 0.05 | 9.748 | 0.9748 |
| 7 | 2.5 | 10 | 1 | 0.2 | 9.109 | 0.9109 |
| 7 | 2.5 | 10 | 10 | 0.05 | 5.938 | 0.5938 |
| 7 | 2.5 | 10 | 10 | 0.2 | 5.586 | 0.5586 |
| 72 | 1.25 | TRANSMISSION SPEED A | 1 | 0.05 | 21.128 | 2.1128 |
| 72 | 1.25 | 1 | 1 | 0.2 | 16.603 | 1.6603 |
| 72 | 1.25 | 1 | 10 | 0.05 | 10.146 | 1.0146 |
| 72 | 1.25 | 1 | 10 | 0. | AMOUNT OF CHANGE | 0.9167 |
| 72 | 1.25 | 10 | 1 | 0. | | 1.0164 |
| 72 | 1.25 | 10 | 1 | 0.2 | 9.148 | 0.9148 |
| 72 | 1.25 | 10 | 10 | 0.05 | 6.331 | 0.6331 |
| 72 | 1.25 | 10 | 10 | 0.2 | 6.408 | 0.6408 |
| 72 | 2.5 | TRANSMISSION SPEED B | 1 | 0.05 | 21.136 | 2.1136 |
| 72 | 2.5 | 1 | 1 | 0.2 | 16.277 | 1.6277 |
| 72 | 2.5 | 1 | 10 | 0.05 | 10.028 | 1.0028 |
| 72 | 2.5 | 1 | 10 | 0.2 | 9.393 | 0.9393 |
| 72 | 2.5 | 10 | 1 | 0.05 | 9.931 | 0.9931 |

CONDITION A

CONDITION B

# FIG. 29

|  | VALUES OF PARAMETERS HAVING EFFECT ON NOISE | | | | COMPUTATION RESULT OF NOISE | | |
| NUMBER OF CONSECUTIVE 0s | TRANSMISSION SPEED (Gbps) | NOISE SOURCE LOSS (dB@1.6GHz) | TARGET NET LOSS (dB@1.6GHz) | trtf | NOISE (mVpp) | Xtalk RATIO (%) | INCREASE FACTOR |
|---|---|---|---|---|---|---|---|
| 7 | 1.25 | 1 | 1 | 0.05 | 21.4 | 2.14 | |
| 7 | 2.5 | 1 | 1 | 0.05 | 20.518 | 2.0518 | −0.071 |
| 7 | 1.25 | 10 | 10 | 0.2 | 6.162 | 0.6162 | |
| 7 | 2.5 | 10 | 10 | 0.2 | 5.586 | 0.5586 | −0.046 |
| 72 | 1.25 | 1 | 1 | 0.05 | 21.128 | 2.1128 | |
| 72 | 2.5 | 1 | 1 | 0.05 | 21.136 | 2.1136 | 0.001 |
| 72 | 1.25 | 10 | 10 | 0.2 | 6.408 | 0.6408 | |
| 72 | 2.5 | 10 | 10 | 0.2 | 5.785 | 0.5785 | −0.050 |

0.001

MAX VALUE
(= WORST VALUE)

# FIG. 30

| VALUES OF PARAMETERS HAVING EFFECT ON NOISE | | | | | COMPUTATION RESULT OF NOISE | |
|---|---|---|---|---|---|---|
| NUMBER OF CONSECUTIVE 0s | TRANSMISSION SPEED (Gbps) | NOISE SOURCE LOSS (dB@1.6GHz) | TARGET NET LOSS (dB@1.6GHz) | trtf | NOISE (mVpp) | Xtalk RATIO (%) |
| 7 | 1.25 | 1 | 1 | 0.05 | 21.4 | 2.14 |
| 7 | 1.25 | 1 | 1 | 0.2 | 16.5 | 1.65 |
| 7 | 1.25 | 1 | 10 | 0.05 | 9.603 | 0.9603 |
| 7 | 1.25 | 1 | 10 | 0.2 | 9.048 | 0.9048 |
| 7 | 1.25 | 10 | 1 | 0.05 | 9.778 | 0.9778 |
| 7 | 1.25 | 10 | 1 | 0.2 | 9.07 | 0.907 |
| 7 | 1.25 | 10 | 10 | 0.05 | 6.375 | 0.6375 |
| 7 | 1.25 | 10 | 10 | 0.2 | 6.162 | 0.6162 |
| 7 | 2.5 | 1 | 1 | 0.05 | 20.518 | 2.0518 |
| 7 | 2.5 | 1 | 1 | 0.2 | 16.345 | 1.6345 |
| 7 | 2.5 | 1 | 10 | 0.05 | 9.92 | 0.992 |
| 7 | 2.5 | 1 | 10 | 0.2 | 9.149 | 0.9149 |
| 7 | 2.5 | 10 | 1 | 0.05 | 9.748 | 0.9748 |
| 7 | 2.5 | 10 | 1 | 0.2 | 9.109 | 0.9109 |
| 7 | 2.5 | 10 | 10 | 0.05 | 5.938 | 0.5938 |
| 7 | 2.5 | 10 | 10 | 0.2 | 5.586 | 0.5586 |
| 72 | 1.25 | 1 | 1 | 0.05 | 21.128 | 2.1128 |
| 72 | 1.25 | 1 | 1 | 0.2 | 16.603 | 1.6603 |
| 72 | 1.25 | 1 | 10 | 0.05 | 10.146 | 1.0146 |
| 72 | 1.25 | 1 | 10 | 0.2 | 9.167 | 0.9167 |
| 72 | 1.25 | 10 | 1 | 0.05 | 10.164 | 1.0164 |
| 72 | 1.25 | 10 | 1 | 0.2 | 9.148 | 0.9148 |
| 72 | 1.25 | 10 | 10 | 0.05 | 6.331 | 0.6331 |
| 72 | 1.25 | 10 | 10 | 0.2 | 6.408 | 0.6408 |
| 72 | 2.5 | 1 | 1 | 0.05 | 21.136 | 2.1136 |
| 72 | 2.5 | 1 | 1 | 0.2 | 16.277 | 1.6277 |
| 72 | 2.5 | 1 | 10 | 0.05 | 10.028 | 1.0028 |
| 72 | 2.5 | 1 | 10 | 0.2 | 9.393 | 0.9393 |
| 72 | 2.5 | 10 | 1 | 0.05 | 9.931 | 0.9931 |

REFERENCE CONDITION

## FIG. 31

| VALUES OF PARAMETERS HAVING EFFECT ON NOISE | | | | | COMPUTATION RESULT OF NOISE | |
|---|---|---|---|---|---|---|
| NUMBER OF CONSECUTIVE 0s | TRANSMISSION SPEED (Gbps) | NOISE SOURCE LOSS (dB@1.6GHz) | TARGET NET LOSS (dB@1.6GHz) | trtf | NOISE (mVpp) | Xtalk RATIO (%) |
| 7 | 1.25 | 1 | 1 | 0.05 | 21.4 | 2.14 |
| 7 | 1.25 | 1 | 1 | 0.2 | 16.5 | 1.65 |
| 7 | 1.25 | 1 | 10 | 0.05 | 9.603 | 0.9603 |
| 7 | 1.25 | 1 | 10 | 0.2 | 9.048 | 0.9048 |
| 7 | 1.25 | 10 | 1 | 0.05 | 9.778 | 0.9778 |
| 7 | 1.25 | 10 | 1 | 0.2 | 9.07 | 0.907 |
| 7 | 1.25 | 10 | 10 | 0.05 | 6.375 | 0.6375 |
| 7 | 1.25 | 10 | 10 |  | 6.162 | 0.6162 |
| 7 | 2.5 | 1 | 1 |  | 20.518 | 2.0518 |
| 7 | 2.5 | 1 | 1 | 0.2 | 16.345 | 1.6345 |
| 7 | 2.5 | 1 | 10 | 0.05 | 9.92 | 0.992 |
| 7 | 2.5 | 1 | 10 | 0.2 | 9.149 | 0.9149 |
| 7 | 2.5 | 10 | 1 | 0.05 | 9.748 | 0.9748 |
| 7 | 2.5 | 10 | 1 | 0.2 | 9.109 | 0.9109 |
| 7 | 2.5 | 10 | 10 | 0.05 | 5.938 | 0.5938 |
| 7 | 2.5 | 10 | 10 | 0.2 | 5.586 | 0.5586 |
| 72 | 1.25 | 1 | 1 | 0.05 | 21.128 | 2.1128 |
| 72 | 1.25 | 1 | 1 | 0.2 | 16.603 | 1.6603 |
| 72 | 1.25 | 1 | 10 | 0.05 | 10.146 | 1.0146 |
| 72 | 1.25 | 1 | 10 | 0.2 | 9.167 | 0.9167 |
| 72 | 1.25 | 10 | 1 | 0.05 | 10.164 | 1.0164 |
| 72 | 1.25 | 10 | 1 | 0.2 | 9.148 | 0.9148 |
| 72 | 1.25 | 10 | 10 | 0.05 | 6.331 | 0.6331 |
| 72 | 1.25 | 10 | 10 | 0.2 | 6.408 | 0.6408 |
| 72 | 2.5 | 1 | 1 | 0.05 | 21.136 | 2.1136 |
| 72 | 2.5 | 1 | 1 | 0.2 | 16.277 | 1.6277 |
| 72 | 2.5 | 1 | 10 | 0.05 | 10.028 | 1.0028 |
| 72 | 2.5 | 1 | 10 | 0.2 | 9.393 | 0.9393 |
| 72 | 2.5 | 10 | 1 | 0.05 | 9.931 | 0.9931 |

REFERENCE CONDITION

CONDITION VALUE DIFFERENCE

CURRENT CONDITION

CONDITION VALUE DIFFERENCE

# FIG. 32

# FIG. 33

Va

WIRE COUPLING MODEL

WIRE SPACING

Vv

# FIG. 34

CROSSTALK RATIO (%)

INTERCEPT

WIRE SPACING
COEFFICIENT

WIRE SPACING (mm)

# FIG. 35

CROSSTALK RATIO

FREQUENCY

# FIG. 36

CROSSTALK RATIO

MULTIPLIED BY
DATA PROCESSING
COEFFICIENT

FREQUENCY

## FIG. 37

EP 2 159 928 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007133484 A
- JP 2003152040 A

- EP 1300964 A1

**Non-patent literature cited in the description**

- DSL Simulation Techniques and Standards. **Chen W Y.** DSL: Simulation Techniques and Standards Development for Digital Subscriber Line Systems. Macmillan, 01 January 1998, 48-5364